(19) Europäisches Patentamt
European Patent Office
Office européen des brevets

(11) EP 1 416 405 A1

(12) EUROPEAN PATENT APPLICATION
published in accordance with Art. 158(3) EPC

(43) Date of publication:
**06.05.2004 Bulletin 2004/19**

(21) Application number: **02755822.0**

(22) Date of filing: **05.08.2002**

(51) Int Cl.7: **G06F 17/60**

(86) International application number:
**PCT/JP2002/007964**

(87) International publication number:
**WO 2003/014991 (20.02.2003 Gazette 2003/08)**

(84) Designated Contracting States:
**AT BE BG CH CY CZ DE DK EE ES FI FR GB GR IE IT LI LU MC NL PT SE SK TR**

(30) Priority: **06.08.2001 JP 2001238374**

(71) Applicant: **Sony Corporation**
**Tokyo 141-0001 (JP)**

(72) Inventors:
- **HANAZATO, Takashi**
  **c/o SONY MARKETING (JAPAN) INC.**
  **Tokyo 108-0074 (JP)**
- **CHIYODA, Kenji**
  **c/o SONY MARKETING (JAPAN) INC.**
  **Tokyo 108-0074 (JP)**
- **KAWABE, Takuya**
  **c/o SONY MARKETING (JAPAN) INC.**
  **Tokyo 108-0074 (JP)**
- **SHIMOZONO, Kazuaki**
  **c/o SONY MARKETING (JAPAN) INC.**
  **Tokyo 108-0074 (JP)**
- **KENMOCHI, Kai**
  **c/o SONY MARKETING (JAPAN) INC.**
  **Tokyo 108-0074 (JP)**

(74) Representative: **DeVile, Jonathan Mark, Dr. et al**
**D. Young & Co**
**21 New Fetter Lane**
**London EC4A 1DA (GB)**

# (54) SUPPLY CHAIN MANAGEMENT SYSTEM AND MANAGEMENT PROGRAM

(57) A supply chain management apparatus which allows determination of the number of orders in accordance with actual demand in a supply chain, and enables a smooth and immediate change in order/production/supply even when the actual demand varies. The supply chain management apparatus creates finished product demand forecast information based on actual sales information provided by a distributor terminal apparatus, creates part demand forecast information from the finished product demand forecast information, provides this for a part manufacturer side apparatus, creates finished product delivery schedule information based on part delivery schedule information provided by the part provider side apparatus, and provides the finished produce delivery schedule information for the distributor terminal apparatus. Said distributor terminal apparatus enables making of a modification request for the finished product demand forecast information after it receives the demand forecast information. Said supply chain management apparatus can modify the finished product demand forecast information and the finished product delivery schedule information in accordance with the modification request.

F I G. 2

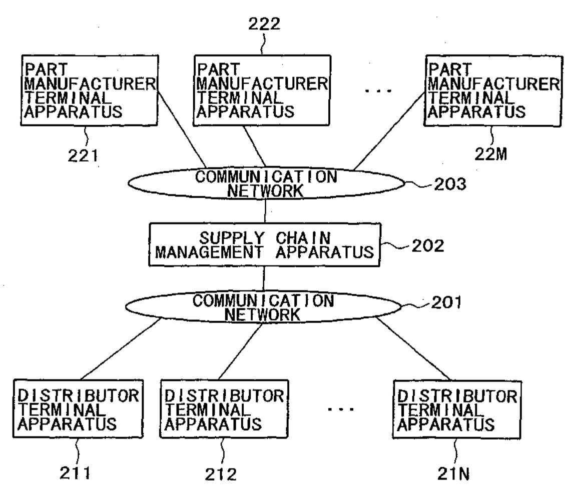


EP 1 416 405 A1

## Description

TECHNICAL FIELD

The present invention relates to a supply chain management system, a distributor terminal apparatus, a part manufacturer terminal apparatus, a supply chain management apparatus, a supply chain management method, a program thereof, and a program recording medium. More particularly, the present invention relates to a supply chain management system, a distributor terminal apparatus, a part manufacturer terminal apparatus, a supply chain management apparatus, a supply chain management method, a program thereof, and a program recording medium which allow determination of the number of orders in accordance with actual demand by sharing finished product demand forecast information and the like among distributors, finished product manufacturers, part manufacturers and the like, and enable a smooth and immediate change in an order/production/supply system even when the actual demand varies.

BACKGROUND ART

Supply chain management receives attention in terms of company management reform of companies in recent years.

The "supply chain" is considered as all activities concerning processing and flows of commodities from raw materials to end users. The "management" thereof refers to all and total integrative activities which improve interconnections in the supply chain to ensure persistent advantage in competition of companies. In other words, it can be said that the "supply chain management" is a management technique which shares management resources or information across company or organization barriers to thoroughly reduce waste of processes as one business process with the aim of whole optimization.

As a system for realizing such a supply chain, conventional supply chain systems include (1) a system concerning orders of particular companies (retailers in many cases) within a supply chain or (2) a system operated with purchasing of end customers as a trigger.

A technique described in Japanese Patent Application No. 2000-207567 discloses a technique which allows retrieval of a presented quantity of a future suppliable quantity in a store, presentation of a delivery time to a customer, and distribution to the customer's house by the determined delivery time if an order is given. This is a technique concerning improvement of a supply chain between customers and supply manufacturers and is a system in the aforementioned form (1).

In addition, a technique described in Japanese Patent Application No. 2000-068651 discloses a technique which manages order information on commodities sold through a distribution channel using a network and order information on commodities sold through a distribution channel except for the network to thereby try to control inventory appropriately. This technique is a technique concerning improvement in inventory control of supply manufacturers and is a system in aforementioned form (1).

In turn, a system in the aforementioned form (2) is a technique described in Japanese Patent Application No. 2000-207568. The technique is a technique which, when a customer tries to purchase a desired commodity or to specify a predetermined commodity, appropriately presents information on a commodity usable in connection with the desired commodity or the specified commodity.

The systems in the aforementioned form (1) have problems as below.

When the number of orders does not match actual demand, the supply chain does not function. In addition, the grounds for the orders are not shared among other members participating in the supply chain, and accuracy of the number of orders to the actual demand cannot be verified. Thus, when the number of orders deviates from the actual demand, the adjustment thereof must be achieved outside the supply chain system.

Especially, adverse effects such as occurrence of inactive inventory and work-in-process inventory often appear on the supply side which requires a lead time in production. The cost of disposing such inventory or the like is passed along to the supply price of finished products to inevitably cause incomplete achievement of economic rationality which primarily should be aimed by the supply chain system.

Other than the aforementioned cases, when market prices are considered fixedly, benefits which primarily should be obtained by any of those participating in the supply chain system are constrained.

The system in the aforementioned form (2) has problems as below.

When purchasing of end customers is used as a trigger, inefficiency occurs due to large item small scale production and supply. In addition, the purchasing of end customers greatly varies with promotion of distribution/manufacturers, and when the purchasing of end customers is suddenly increased, supply of parts requiring much lead time in production cannot be supported.

DISCLOSURE OF THE INVENTION

The present invention has been made for the purpose of solving the aforementioned problems, and has characteristics as below as means for solving such problems.

(A) The present invention relates to a supply chain management system comprising a supply chain management apparatus, a distributor terminal apparatus, and a part manufacturer terminal apparatus.

The above mentioned distributor terminal apparatus provides actual sales information for the supply chain management apparatus, and receives finished product delivery schedule information created by the supply chain management apparatus based on that actual sales information. The provision of the actual sales information may be in either of information transmission schemes of a so-called PULL type and PUSH type. The same applies to the following provision of information.

The part manufacturer terminal apparatus receives part demand forecast information on a part manufactured by a part manufacturer handling that apparatus, creates part delivery schedule information based on this, and provides this for the supply chain management apparatus.

The supply chain management apparatus creates finished product demand forecast information based on the actual sales information provided by the distributor terminal apparatus, creates the part demand forecast information from the finished product demand forecast information, provides this for the part manufacturer terminal apparatus, creates the finished product delivery schedule information based on the part delivery schedule information provided by that part manufacturer terminal apparatus, and provides that finished product delivery schedule information for the distributor terminal apparatus.

The distributor terminal apparatus is able to issue a modification request for the finished product demand forecast information after it receives the demand forecast information, and the supply chain management apparatus is able to perform the modification to the finished product demand forecast information and the finished product delivery schedule information in accordance with the modification request.

Thus, the present system acts to support immediately a change in actual demand.

(B) The present invention is characterized by comprising actual sales information providing means for providing actual sales information, and finished product delivery schedule information presenting means for presenting finished product delivery schedule information created based on the actual sales information.

Thus, the present invention acts to optimize a part production plan and a delivery plan concerning a finished product and its parts based on actual demand.

(C) The present invention is characterized by comprising actual sales information providing means for providing actual sales information, finished product demand forecast information creating means for receiving the actual sales information from the actual sales information providing means, creating distributor specific finished product demand forecast information based on the actual sales information, and providing this, and finished product delivery schedule information presenting means for presenting finished product delivery schedule information created based on the finished product demand forecast information.

According to this characteristic, since the distributor side which easily obtains information on variations in demand creates the finished product demand forecast information, the present invention acts to easily reflect the information on variations in demand in the finished product demand forecast information.

(D) The present invention is characterized by having part demand forecast information acquiring means for receiving part demand forecast information, and part delivery schedule information creating means for creating part delivery schedule information based on information input in accordance with the part demand forecast information.

(E) The present invention is characterized by comprising finished product demand forecast information creating means for creating finished product demand forecast information based on actual sales information, part demand forecast information creating means for receiving the finished product demand forecast information from the finished product demand forecast information creating means, and creating part demand forecast information using this, and finished product delivery schedule information creating means for creating finished product delivery schedule information using part delivery schedule information created using part manufacturer specific part demand forecast information.

(F) The present invention is characterized by comprising finished product demand forecast information aggregating means for receiving distributor specific finished product demand forecast information and creating finished product demand forecast information, part demand forecast information creating means for receiving the finished product demand forecast information from the finished product demand forecast information aggregating means and creating part demand forecast information using this, and finished product delivery schedule information creating means for creating finished product delivery schedule information using part delivery schedule information created using the part demand forecast information.

(G) The present invention is characterized by a supply chain management method for managing a supply chain among a distributor, a finished product manufacturer, and a part manufacturer, comprising a step of creating finished product demand forecast information based on provided actual sales information, a step of creating part demand forecast information from the finished product demand forecast information, and a step of creating finished product delivery schedule information based on part delivery schedule information created using the part demand forecast information, and providing the finished product delivery schedule information.

(H) The present invention is characterized by comprising a step of aggregating provided distributor specific finished product demand forecast information to create finished product demand forecast information, a step of creating part demand forecast information from the finished product demand forecast information, and creating finished product delivery schedule information based on part delivery schedule information created using the part demand forecast information, and a step of providing the finished product delivery schedule information.

(I) The present invention is characterized by comprising a step of providing actual sales information, a step of acquiring finished product delivery schedule information created based on the actual sales information and presenting this, and a step of receiving information on a modification to finished product demand forecast information after the demand forecast information is received.

(J) The present invention is characterized by comprising a step of receiving part demand forecast information, and a step of creating part delivery schedule information based on information input in accordance with the part demand forecast information and providing this.

## BRIEF DESCRIPTION OF THE DRAWINGS

Fig. 1 is a diagram for explaining the mechanism of a business model;

Fig. 2 is a block diagram showing an example of the configuration of a supply chain management system;

Fig. 3 is a block diagram showing an example of the configuration of a distributor terminal apparatus;

Fig. 4 is a block diagram showing an example of the configuration of a part manufacturer terminal apparatus;

Fig. 5 is a block diagram showing an example of the configuration of a supply chain management apparatus;

Fig. 6 is an activity diagram showing an example of the operation of the supply chain management system;

Fig. 7 is a diagram showing an example of the configuration of actual sales information;

Fig. 8 is an activity diagram showing an example of the operation of a part demand forecast information creating means;

Fig. 9 is a diagram showing an example of the configuration of a finished product/parts conversion table;

Fig. 10 is a diagram showing an example of the configuration of an input interface for part delivery schedule information;

Fig. 11 is an activity diagram showing an example of the operation of a finished product delivery schedule information creating means;

Fig. 12 is a diagram showing an example of the display of finished product delivery schedule information;

Fig. 13 is a diagram showing an example of the configuration of a modification screen;

Fig. 14 is a block diagram showing an example of the configuration of a distributor terminal apparatus; and

Fig. 15 is a block diagram showing an example of the configuration of a supply chain management apparatus.

## BEST MODE FOR CARRYING OUT THE INVENTION

(About Business Model Serving As Basis of the Present Invention)

A business model according to the present invention is described with reference to Fig. 1. Fig. 1 is a diagram for explaining flow of information in the present business model.

In the diagram, distributors 104, 105 are those who receive orders of commodities which are finished products composed of a plurality of parts from end customers 101, 102, 103 and sell them as business. The "finished product" herein refers to any article composed of a plurality of parts and does not preclude a finished product being used as a part of another article.

The distributors 104, 105 make orders of commodities for sale to a finished product manufacturer 106.

The finished product manufacturer 106 purchases various parts from part manufacturers 107, 108, and assembles them for delivery to the distributors 104, 105.

The part manufacturers 107, 108 manufacture parts required for assembling the finished products and deliver them to the finished product manufacturer 106.

In the present business model, each of the distributors 104, 105 transmits to the finished product manufacturer 106 information which is a basis of forecasting of future demand such as past sales performance of a commodity (finished product) of the finished product manufacturer 106 (hereinafter referred to as "actual sales information"). When there are a plurality of types of commodities, actual sales information for each type is transferred to the finished product manufacturer 106.

The finished product manufacturer 106 creates information on the number and the time of expected orders of the commodity immediately afterward and in the future (hereinafter referred to as "finished product demand forecast information") based on the actual sales information provided by each of the distributors 104, 105. When there are a plurality of types of commodities, demand forecast information for each type (hereinafter referred to as "finished product specific product demand forecast information," and a set of the "finished product specific product demand forecast information" is simply referred to as "finished product demand forecast information") is created.

The finished product manufacturer 106 creates information indicating the quantity and time of required parts for manufacturing the finished product by the finished product manufacturer 106 in the future (hereinafter referred to as "part demand forecast information") for parts used in the finished product based on the finished product demand forecast information. For example, when a finished product is composed of one part A and two parts B, and when the demand forecast number of the finished product is two, part demand forecast information indicating two parts A and four parts B is created.

The finished product manufacturer 106 provides the part demand forecast information to each of the part manufacturers 107, 108. For example, the part manufacturer 107 manufactures the part A and the part manufacturer 108 manufactures the part B, then the part demand forecast information on the part A is provided for the part manufacturer 107, and the part demand forecast information on the part B is provided for the part manufacturer 108.

The part manufacturers 107, 108 provide part delivery schedule information for the finished product manufacturer 106 based on the provided part demand forecast information. The part delivery schedule information is information on the deliverable number and time of a part.

The finished product manufacturer 106 creates information on the number and the time of deliverable finished products (hereinafter referred to as "finished product delivery schedule information") when finished products are manufactured from parts and the finished products are delivered to the distributors 104, 105 based on the part delivery schedule information provided by each of the part manufacturers 107, 108. The finished product delivery schedule information is created in accordance with the finished product demand forecast information.

The finished product manufacturer 106 provides this finished product demand forecast information and the finished product delivery schedule information for each of the distributors 104, 105.

When the distributors 104, 105 investigate the finished product demand forecast information and the finished product delivery schedule information, and wants to propose a modification to the finished product demand forecast information for any reason, it may be possible to request the modification to the finished product demand forecast information. For example, when the forecast sales number of a finished product A next week is three units in the provided finished product demand forecast information, but if the distributor 104 expects six units as the forecast sales number of the finished product A next week since it is planning to have a special fair next week and expecting many visitors, it requests such a modification to the finished product demand forecast information.

When the finished product manufacturer 106 receives such a modification to the finished product demand forecast information, it modifies the finished product demand forecast information in accordance with the request, then the modification is immediately incorporated in the part demand forecast information, the part delivery schedule information, and the finished product delivery schedule information.

According to the present business model, the finished product demand forecast information may be shared on the Internet among the distributors 104, 105, the finished product manufacturer 106, and the part manufacturers 107, 108. The finished product manufacturer 106 proposes the number of supplied finished products to the distributors 104, 105 based on the finished product demand forecast information, and in response to that, the distributors 104, 105 plan the number of orders of the finished product. A business negotiation process may possibly be electronically and automatically performed.

Since the part demand forecast information and the part delivery schedule information are shared among the finished product manufacturer 106 and the part manufacturers 107, 108, the part manufacturers 107, 108 propose the number of supplied parts to the finished product manufacturer 106 based on the part demand forecast information, and based on this, the finished product manufacturer 106 can plan the assembly schedule of the finished product and the delivery to the distributors 104, 105.

The finished product forecast information can be created by representing a demand trend for each item (commodity) as an index (coefficient) from the actual sales information composed of performance data or the like such as POS (point-of-sale), and multiplying the numeric value of the actual sales information by the index (coefficient) or the like to determine a demand forecast quantity.

The distributors 104, 105 may check these information and transfer data to an automatic ordering system if no problem exists. If they have an objection, its own demand forecast number may be input to request a modification. The finished product manufacturer 106 may change a production plan in the future with the modified information.

According to this mechanism, a sudden change in demand can be supported immediately.

In addition, according to the present business model, since the finished product demand forecast information which is a demand forecast based on the performance is used, it is expected that a difference is extremely reduced between the demand forecast and the actual sales quantity. Also, since the finished product demand forecast information is shared among the respective layers (the distributors, the finished product manufacturer, the part manufacturers), a modification can be made immediately when a difference occurs between the demand forecast and the actual sales quantity. As a result, it is possible to achieve minimization of loss of sales chances and a reduction in inventory risk.

An entity involved in the present business model can receive benefits as follows.

(1) The distributors 104, 105 can receive the following merits.

(i) Demand forecasts in the distant future can be made, and based on those, commodities (finished products) can be ordered.
(ii) Sales to customers can be made with reference to the advance delivery time from the finished product manufacturer 106 to reduce loss of sales chances (advance orders may be considered as a premise). In addition, inventory can be effectively turned over.

(2) The finished product manufacturer 106 can receive the following merits.

Since an advance demand forecast can be made based on the actual sales data from the distributors 104, 105:

(i) parts can be ensured in the distant future based on the advance demand forecast.
(ii) market inventory can be leveled since the actual sales inventory situation can be checked in each retailer.
(iii) inventory can be effectively turned over based on the demand forecast information.

(3) The part manufacturers 107, 108 can receive the following merits.

(i) A product plan can be made based on the advance demand (advance part order assurance) of the finished product manufacturer. Thus, improvement in cash flow can be expected.
(ii) Since the demand forecast of the finished product manufacturer is used as a base, a plan of production/delivery of parts can be easily made.

(First Mode for Carrying-out)

Next, description is made for a system for realizing the aforementioned business model that is a supply chain management system according to a first mode for carrying-out of the present invention.

(Example of Configuration of Supply Chain Management System)

First, the system configuration of the supply chain management system is described. Fig. 2 is a block diagram showing an example of the configuration of the supply chain management system according to the present mode for carrying out.

The supply chain management system has a supply chain management apparatus 202, distributor terminal apparatuses 211, 212, ..., 21N connectable to the supply chain management apparatus 202 through a communication network 201, and part manufacturer terminal apparatuses 221, 222, ..., 22M connectable to the supply chain management system through a communication network 203.

(Communication Networks 201, 203)

Each of the communication networks 201, 203 serves, when each apparatus connected thereto establishes a session for an intended apparatus, to allow transmission and reception of information between them regardless of being wired or wireless, dedicated lines or switched lines. Each communication network may be realized by a combination of a plurality of networks through gateways like the Internet. In addition, as for the connection, temporary connection through PPP (Point to Point Protocol) connection may be used if information can be transmitted and received between them when a session is established without direct connection to a basic line which is a so-called backbone. It should be noted that the aforementioned "communication networks" include a communication network which does not use a switching apparatus like a dedicated line run fixedly.

In addition, while the communication networks 201, 203 are shown as separate communication networks in the diagram, these communication networks are not necessarily separate in the present mode for carrying out, and may be configured such that the distributor terminal apparatuses and the part manufacturer terminal apparatuses can be connected to the supply chain management apparatus 202 through the same communication network.

(Distributor Terminal Apparatus)

The distributor terminal apparatuses 211, 212, ..., 21N (hereinafter, referred to as the distributor terminal apparatus 211 as a representative of them) are apparatuses for distributors to provide actual sales information and receive finished product demand forecast information and finished product delivery schedule information created based on that actual sales information, and are information processing apparatuses accessible to the supply chain management apparatus 202 through the communication network 201. The information processing apparatus is an apparatus having a central processing unit (CPU), a main memory (RAM), a read-only memory (ROM), an input/output device (I/O), a hard disk device and the like, and for example, may be an information processing apparatus such as a computer, a workstation, a cellular phone, a mobile communication terminal, a PDA (Personal Digital Assistant). The apparatus is an information processing apparatus having a function of performing information exchange with the supply chain management apparatus 202 through the communication network 201 and is equipped with a so-called browser, for example, Web document browsing software.

Here, the "distributors" refer to those who are selling or renting a finished product to those who want it, and include, for example, a retailer, a mass merchandiser, a department store, a supermarket, a mail-order company having no store. An organization which governs purchasing of commodities involving a plurality of stores is also included. The "distributor terminal apparatuses" refer to apparatuses used by the distributors in the present system and their installation locations are not intended to be limited. It does not necessarily mean installation in facilities of the distributors such as a store or a warehouse of the distributors.

(Example of Configuration of Distributor Terminal Apparatus)

Next, an example of the configuration of the distributor terminal apparatus 211 is described.

Fig. 3 is a block diagram showing an example of the configuration of the distributor terminal apparatus 211.

The distributor terminal apparatus 211 has a communication control means 301, an actual sales information providing means 303, an actual sales information recording means 302, a finished product delivery schedule information acquiring means 304, and a finished product delivery schedule information presenting means 305.

The communication control means 301 has a function of performing transmission/reception of data to and from the supply chain management apparatus 202, and is comprised of, for example, software handling a communication protocol such as TCP/IP and hardware such as a CPU for executing the software and a memory.

The actual sales information recording means 302 has a function of storing actual sales information composed of past sales performance or the like for each commodity (finished product). The actual sales information may be formed of data collected by a POS (point-of-sale) system of the distributor.

The actual sales information providing means 303 has a function of accessing the supply chain management apparatus 202 through the communication control means 301 and the communication network 201, reading the actual sales information from the actual sales information recording means, and providing this for the supply chain management apparatus 202.

The finished produced delivery schedule information acquiring means 304 has a function of accessing the supply chain management apparatus 202 through the communication control means 301 and the communication network 201, and receiving finished product delivery schedule information on that distributor from the supply chain management apparatus 202. It should be noted that it may function to receive finished produce demand forecast information together with the finished product delivery schedule information. In the present mode for carrying out, the distributor terminal apparatus is to receive the finished product demand forecast information together with the finished product delivery schedule information. The present means 304 may be comprised of browsing software, for example a so-called browser, and hardware such as a CPU for executing the software and a memory.

The finished product delivery schedule information presenting means 305 has a function of displaying the finished product delivery schedule information in a form recognizable by a user and displaying a user interface for requesting a modification to the demand forecast information, and for example, is comprised of a display apparatus (a liquid crystal display, a CRT (cathode-ray tube) display or the like) which can display such information.

(Part Manufacturer Terminal Apparatus)

Next, the part manufacturer terminal apparatuses 221, 222, ..., 22M (hereinafter referred to as the part manufacturer terminal apparatus 221 as a representative of them) are described.

The part manufacturer terminal apparatus 221 is an apparatus having a function of receiving, by the part manufacturer, part demand forecast information on parts handled by the part manufacturer, creating part delivery schedule information based on this, and providing this for the supply chain management apparatus 202, and is an information processing apparatus accessible to the supply chain management apparatus 202 through the communication network 203. The information processing apparatus is an apparatus having a central processing unit (CPU), a main memory (RAM), a read-only memory (ROM), an input/output device (I/O), a hard disk device and the like, and for example, may be an information processing apparatus such as a computer, a workstation, a cellular phone, a mobile communication terminal, and a PDA (Personal Digital Assistant). The apparatus has a function for performing information exchange with the supply chain management apparatus 202 through the communication network 203, and an information processing apparatus equipped with a so-called browser, for example, Web document browsing software.

Here, the "part manufacturers" refer to those manufacturing parts required for creating the finished product handled by the finished product manufacturer and selling or handing over the manufactured parts to the finished product manufacturer, and include a part manufacturer, by way of example. The "part manufacturer terminal apparatuses" refer to apparatuses used by the part manufacturers in the present system, and their installation locations are intended to be limited. It does not necessarily mean installation in a facility of the part manufacturers such as a factory or an office of the part manufacturers.

(Example of Configuration of Part Manufacturer Terminal Apparatus)

Next, an example of the configuration of the part manufacturer terminal apparatus 221 is described. Fig. 4 is a block diagram showing the configuration example of the part manufacturer terminal apparatus 221.

The part manufacturer terminal apparatus 221 has a communication control means 401, a part demand forecast information acquiring means 402, an interface providing means 403, an input means 404, and a part delivery schedule information creating means 405.

The communication control means 401 has a function of performing transmission/reception of data to and from the supply chain management apparatus 202, and is comprised of, for example, software handling a communication protocol such as TCP/IP and hardware such as a CPU and a memory for executing the software.

The part demand forecast information acquiring means 402 has a function of accessing the supply chain management apparatus 202 through the communication control means 401 and the communication network 203 and receiving part demand forecast information on part manufactured by the part manufacturer from the supply chain management apparatus 202.

The interface providing means 403 receives the part demand forecast information from the part demand forecast information acquiring means 402, and has a function of presenting an input interface for prompting an operator of the part manufacturer terminal apparatus 211 based on this information to input information on delivery schedule (the deliverable number or the like).

The input means 404 is a means for the operator to input information on the delivery schedule of parts using the input interface provided by the interface providing means 403, and for example, a keyboard, a pointing device such as a mouse. Alternatively, data corresponding to the delivery schedule information can be transferred directly to the part manufacturer terminal apparatus 221 from a production management system which manages production information on the parts, rather than through the input by the operator.

The part delivery schedule information creating means 405 has a function of receiving the information input to the interface from the interface providing means 403, creating part delivery schedule information based on this, and sending this to the supply chain management apparatus 202 through the communication control means 401, the communication network 203.

(Supply Chain Management Apparatus)

Next, the supply chain management apparatus 202 is described. The supply chain management apparatus 202 has a function of creating finished product demand forecast information based on the actual sales information provided from the distributor terminal apparatus 211, creating part demand forecast information from that finished product demand forecast information, providing this for the part manufacturer terminal apparatus 221, creating finished product delivery schedule information based on part delivery schedule information provided from that part provider side apparatus 221, and providing that finished product delivery schedule information for the distributor terminal apparatus 211.

The supply chain management apparatus 202 is an information processing apparatus connectable to the distributor terminal apparatus 211, the part manufacturer terminal apparatus 221 through the communication networks 201, 203. The information processing apparatus is an apparatus having a central processing unit (CPU), a main memory (RAM), a read-only memory (ROM), an input/output device (I/O), a hard disk device and the like, and for example, may be an information processing apparatus such as a computer, a workstation, a cellular phone, a mobile communication terminal, and a PDA (Personal Digital Assistant).

The supply chain management apparatus 202 has a function of performing information exchange through the communication networks 201, 203.

Here, the "finished product manufacturers" refer to those who are receiving supply of parts from the part manufacturers and assembling or manufacturing, producing a finished product and providing the finished product for the distributor, and include, for example, a manufacturer. In general, it is preferably under control of the finished product manufacturer since it is involved in the production plan of the finished product, but it does not necessarily mean installation in a facility of the finished product manufacturer such as a factory or an office of the finished product manufacturer.

(Example of Configuration of Supply Chain Management Apparatus)

Next, the configuration of the supply chain management apparatus 202 is described. Fig. 5 is a block diagram showing an example of the configuration of the supply chain management apparatus 202. As shown, the supply chain management apparatus 202 has a communication control means 501, an actual sales information acquiring means 502, an actual sales information recording means 503, a finished product demand forecast information creating means 504, a finished product demand forecast information recording means 505, a part demand forecast information creating means 506, a part demand forecast information providing means 507, a part deliver schedule information acquiring means 508, a finished product delivery schedule information creating means 509, and a finished product delivery schedule information providing means 510.

The communication control means 501 has a function of performing transmission/reception of data to and from the distributor terminal apparatus 211, the part manufacturer terminal apparatus 221, and is formed of, for example, software handling a communication protocol such as TCP/IP and hardware such as a CPU and a memory for executing the software.

The actual sales information acquiring means 502 has a function of acquiring the actual sales information provided from the distributor terminal apparatus 211 and recording this in the actual sales information recording means 503.

The actual sales information recording means 503 has a function of recording the actual sales information and providing all or some of the recorded actual sales information for the finished product demand forecast information creating means 504 as required.

The finished product demand forecast information creating means 504 starts operation at predetermined timing (for example, when a predetermined time comes, or when a request is made by the distributor terminal apparatus 211 or the part manufacturer terminal apparatus 221) and has a function of reading the actual sales information from the actual sales information recording means 503, creating the finished product demand forecast information based on this, causing this to be recorded in the finished product demand forecast information recording means 505, and passing that finished product demand forecast information to the part demand forecast information creating means 506.

The finished product demand forecast information recording means 505 operates to acquire the finished product demand forecast information from the finished product demand forecast information creating means 504 and record this.

The part demand forecast information providing means 507 operates to provide the part manufacturer specific part demand forecast information for the associated part manufacturer terminal apparatus.

The part delivery schedule information acquiring means 508 has a function of receiving the part delivery schedule information provided from each part manufacturer terminal apparatus.

The finished product delivery schedule information creating means 509 calculates the number of deliverable units of each finished product for each period using the part delivery schedule information received by the part delivery schedule information acquiring means 508 from each part manufacturer terminal apparatus. The finished product delivery schedule information creating means 509 references the finished product demand forecast information for each distributor stored in the finished product demand forecast information recording means 505, calculates the number of deliverable units assignable to each distributor, and creates finished product delivery schedule information. This finished product delivery schedule information is in a state in which it is aggregated for each distributor.

The finished produce delivery schedule information providing means 510 operates to receive the finished product delivery schedule information in a state in which it is aggregated for each distributor and provides this for the associated distributor terminal apparatus.

(Example of Operation of Supply Chain Management System)

Next, description is made for the operation of the supply chain management system having the aforementioned configuration with reference to Figs. 6 to 15.

Fig. 6 is an activity diagram showing an example of the operation of the supply chain management system. In the example shown, it is assumed that one distributor terminal apparatus 211 and two part manufacturer terminal apparatuses 221(A), 222(B), and the supply chain management apparatus 202 are operated.

First, the distributor terminal apparatus 211 provides actual sales information to the supply chain management apparatus 202 with its actual sales information recording means 403 and its actual sales information providing means 303 (step 601).

Fig. 7 is a diagram for explaining an example of the configuration of the actual sales information. This actual sales information has a record 701 which stores daily total numbers of actual sales of a finished product, and a record 702 which stores weekly total numbers of actual sales. Similarly, it has records which store daily total numbers of actual sales and records which store weekly total numbers of actual sales for the other finished products (703, 704). The actual sales information desirably includes information on all finished products (products) handled by that distributor.

While the example has both the record which stores daily total numbers of actual sales and the record which stores weekly total numbers of actual sales for one finished product (product), both are not necessarily provided and only one of them may be provided. In addition, the unit for counting the number of actual sales is not limited to days or weeks, and another arbitrary period (months, every 10 days, every half-day) may be used as the unit for counting the number of actual sales.

Returning to Fig. 6, the description for the operation of the supply chain management system is continued.

The supply chain management apparatus 202 which received the aforementioned actual sales information records this in the actual sales information recording means 503 through the actual sales information acquiring means 502. In the finished product demand forecast information creating means 504, distributor specific finished product demand forecast information is created, this is stored in the finished product demand forecast information recording means, and a set of finished product specific product demand forecast information for each finished product, that is, finished product demand forecast information is created (step 602).

Here, description is made for an example of a method of creating the finished product demand forecast information from the actual sales information by the finished product demand forecast information creating means 504.

It is assumed that the actual sales information recording means 503 has actual sales information recorded therein that a distributor X has a sales performance unit number $\alpha$ of a finished product A in a period T1 (for example, the first week of August last year). The finished product demand forecast information creating means 504 calculates an expected sales unit number $\beta$ of the finished product A in a period T2 (for example, the first week of August this year) corresponding to the period T1 using the following expression:

$$B = f(x, y, z,...) X \alpha$$

In the aforementioned expression, the function f(x, y, z,...) is a function which defines a coefficient representing sales of the finished product A. Its variables (x,y,z,...) include a period x after the start of the sale of the finished product A, a volume of promotion activity y such as advertisements, sales z of competing finished products of other companies and the like, and the coefficient is determined by these variables.

The finished product demand forecast information creating means 504 performs this not only for the period T2 but also for a predetermined period (for example, the second week, the third week, the fourth week of August, respectively). The information obtained in this stage is referred to as distributor specific finished product demand forecast information.

Next, the finished product demand forecast information creating means 504 handles not only the actual sales information from the distributor X but also all actual sales information on the finished product A provided from other distributors similarly, and creates distributor specific finished product demand forecast information on the finished product A for all distributors (however, limited to a case where the actual sales information is provided).

In addition, the distributor specific finished product demand forecast information on the finished product A is used to sum the number of expected sales units of the finished product A for each period, thereby creating finished product specific product demand forecast information.

The finished product demand forecast information creating means 504 performs the aforementioned processing not only for the finished product A but also for all finished products (products) handled by other finished product manufacturers, and creates finished product specific product demand forecast information for each of the products handled by the finished product manufacturers. This set of the finished product specific product demand forecast information is finished product demand forecast information.

In addition, the supply chain management apparatus 202 creates part demand forecast information indicating a demand forecast for each part (part manufacturer specific part demand forecast information) aggregated for each part manufacturer using the finished product demand forecast information by its part demand forecast information creating means 506 (step 603).

Fig. 8 show an activity diagram for explaining an example of the operation of the part demand forecast information creating means 506.

First, the part demand forecast information creating means 506 specifies any one of the finished product specific product demand forecast information constituting the finished product demand forecast information, and specifies the finished product and the quantity associated with the finished product specific product demand forecast information (step 801).

Next, the part demand forecast information creating means 506 references information indicating the correspondence relationship between a finished product and parts constituting the finished product (hereinafter referred to as "finished product/parts conversion table") to acquire all parts associated with the specified finished product (step 802).

Fig. 9 shows an example of the configuration of the finished product/parts conversion table. The table has one record 901, 902, 903, 904, or 905,... for each correspondence between finished products and parts. In this example, since the finished product (product) A is composed of five parts (base unit BU 1, HD 1, drive 1, memory 1, CPU 1), there are five records. Similarly, the other finished product has one record for each part (906). Each record has a finished product name field 907, a part name field 908, and a part manufacturer name field 909.

For example, to specify the parts of the finished product A, records having the name of the finished product A stored in the finished product name field 907 may be extracted to acquire information on part names stored in the part name fields of the extracted records.

Returning again to Fig. 8, the description of the operation of the part demand forecast information creating means 506 is continued.

After step 802, the part demand forecast information creating means 506 provides a value equal to the forecast quantity in the finished product specific product demand forecast information for each specified part as its demand forecast number (the number of parts expected to be required) (step 803). For example, when the demand forecast number of the finished product A in the Second of April is "10," the demand forecast number of the base unit BU 1 which is a part thereof in the Second of April is also "10." Similarly, the demand forecast numbers in the Third of April, the Fourth of April, ... are also determined. This is performed for each of all the parts. With this, the part specific part demand forecast information is created.

In this case, a plurality of part specific part demand forecast information may be crated for the same part because some are used as parts common to a plurality of finished products (products). In this case, the plurality of part specific part demand forecast information for the same part are desirably integrated into one part specific part demand forecast information by adding its demand forecast values.

Next, if another finished product specific demand forecast information is left unprocessed, the part demand forecast information creating means 506 performs the processing from step 801 to 803 for that finished product specific demand forecast information (step 804). This is repeated until no finished product specific demand forecast information is left unprocessed.

When the processing of all the finished product specific demand forecast information is ended, the part demand forecast information creating means 506 creates part manufacturer specific part demand forecast information which is information obtained by aggregating part specific part demand forecast information for each part manufacturer (step 805).

As above, the creation of the part manufacturer specific part demand forecast information (step 603) is ended.

Returning again to Fig. 6, the description of the operation of the supply chain management system is continued.

The supply chain management apparatus 202 provides the part manufacturer specific part demand forecast information created at step 603 for the associated part manufacturer terminal apparatus (step 604). In this example, the part manufacturer specific part demand forecast information aggregated for the part manufacturer A is provided for the part manufacturer terminal apparatus A, and the part manufacturer specific part demand forecast information aggregated for the part manufacturer B is provided for the part manufacturer terminal apparatus B.

The part manufacturer terminal apparatus A which received the part manufacturer specific part demand forecast information provides an input interface for part delivery schedule information including the part manufacturer specific part demand forecast information by the interface providing means 403 through the part demand forecast information acquiring means 402.

Fig. 10 shows an example of the configuration of the input interface for the part delivery schedule information including the part manufacturer specific part demand forecast information. This interface has an area 1001 for displaying part names, an area for displaying a demand forecast value for each week, and an area for inputting a delivery information value (the delivery schedule quantity of the part). A row area 1002 displays a demand forecast quantity based on demand forecast information of the part for each day. A row area 1003 displays a weekly total of demand forecast quantities based on the demand forecast information of the part. A row area 1004 is an area for inputting a daily delivery schedule quantity of the part. A row area 1005 is an area for inputting a weekly total of delivery schedule quantities of the part. This area may display a sum of the row area 1004 for a week by automatically calculating the sum.

The part manufacturer needs to complete delivery prior to the finished product manufacturer requiring parts. Thus, a delivery schedule quantity corresponding to a demand forecast value needs to be set in the week before the week to which the demand forecast value belongs. In this example, to support the demand of a demand forecast value "147" belonging to in "4/9 week," the part manufacturer adjusts to set a delivery schedule quantity "147" in the previous week "4/2 week."

When input is made in all the areas for inputting a delivery schedule quantity of the part for each day, the part delivery schedule information creating means 405 receives the information input to the interface from the interface providing means 403, creates part delivery schedule information based on this, and provides this to the supply chain management apparatus 202 through the communication control means 401, the communication network 203 (step 606).

The part manufacturer terminal apparatus B also creates the part specific delivery schedule information (step 607) similarly to the case of the same apparatus A, provides that part specific delivery schedule information for the supply chain management apparatus 202 (step 608).

The supply chain management apparatus 202 which received the part delivery schedule information from each part manufacturer terminal apparatus receives the part delivery schedule information by the part delivery schedule information acquiring means 508, and creates finished product delivery schedule information by the finished product delivery schedule information creating means 509. This finished product delivery schedule information is in a state in which it is aggregated for each distributor.

Fig. 11 shows an activity diagram showing an example of the operation for creating the finished product delivery schedule information by the finished product delivery schedule information creating means 509. The finished product delivery schedule information creating means 509 first calculates the delivery data, the quantity of the finished product from the delivery data, the quantity of parts associated with the finished product (step 1101). In this event, the aforementioned finished product/parts conversion table may be referenced to determine the parts required for the finished product.

Next, the finished product delivery schedule information creating means 509 compares the demand forecast quantity belonging to the same day or the same week (total demand forecast quantity of the finished product in the day) with the quantity (delivery schedule quantity) calculated at step 1101 (step 1102).

When the demand forecast quantity is equal to or less than the delivery schedule quantity, that delivery schedule quantity is held as an appropriate one (step 1103). On the other hand, when the demand forecast quantity is larger than the delivery schedule quantity, adjustment of the delivery schedule number is performed for each distributor (step 1104). While various methods of adjustment are contemplated, for example, for a distributor having a predetermined number or more of quantity of inventory in that day, it is contemplated that adjustment is made to reduce the delivery schedule quantity, or adjustment is made such that ranks are previously given to distributors and priority is granted to a distributor with a higher rank to give a delivery schedule quantity appropriate for the demand forecast quantity. The present invention can be implemented with any method.

Then, the finished product delivery schedule information is created. At this point, the supply chain management apparatus 202 aggregates the finished product delivery schedule information for each distributor to create finished product delivery schedule information, and provides it for the associated distributor terminal apparatus (step 610).

The distributor terminal apparatus 211 receives the finished product delivery schedule information for that distributor by the finished product delivery schedule information acquiring means 304 (step 611).

That finished product delivery schedule information is displayed by the finished product delivery schedule information presenting means 305 in a form which the user can recognize.

Fig. 12 is a diagram showing an example of the display of the finished product delivery schedule information displayed by the distributor terminal apparatus 211. In this example, an area 1201 indicating weekly total actual sales and a demand forecast quantity, an area 1202 indicating daily total actual sales and a demand forecast quantity, an area 1203 indicating the number in inventory, an area 1204 indicating the delivery schedule number and the like are provided for one finished product. The same applies to other finished products (area 1205). In this example, the delivery schedule number is not displayed for portions in the past.

(Feedback of Modified Actual Sales Information)

In the present embodiment, after the distributor terminal apparatus receives the finished product delivery schedule information, it is possible to perform processing for requesting a modification to the finished product demand forecast information from the supply chain management apparatus 202.

Fig. 13 shows an example of an input interface for requesting a modification to the finished product demand forecast information. In this example, for one finished product, an area 1301 indicating weekly total actual sales and a demand forecast quantity, an area 1302 indicating daily total actual sales and a demand forecast quantity, an area 1303 for inputting a modification value of demand forecast completion, an area 1304 indicating whether or not that modification can be approved (whether or not delivery satisfying the modification can be ensured), an area 1305 indicating the number in inventory, and an area 1306 indicating the delivery schedule number are provided. The same applies to other finished products (area 1307).

In the area 1308, "2" is input as an modification value which means that the distributor side expects sales of two more units expected than a demand forecast value "5" in that day. The area 1309 shows that whether or not delivery satisfying that increase is possible or not is "not yet determined." "Completed" is displayed if such an increase is possible from the delivery schedule on the part manufacturer side, the assembly schedule on the finished product manufacturer side and the like, and "not" is displayed if not possible.

The modification value is sent to the supply chain management apparatus 202 to make the modification to the demand forecast information. Based on the modified finished product demand forecast information, modification are again made to the part demand forecast information, the part delivery schedule information, and the finished product delivery schedule information to allow adjustment of the production schedule, the delivery schedule, the sales schedule and the like of the distributor, the finished product manufacturer, and the part manufacturer.

(Advantages of System According to Present Mode for Carrying out)

The supply chain management system according to the present mode for carrying out has advantages as follows.

A demand forecast value is shared in addition to the number of orders among companies participating in the supply chain. Thus, it is possible not only to construct an effective production/supply system based on the number of orders, but also to determine the number of orders in accordance with actual demand, and to smoothly and immediately change an ordering/production/supply system even when actual demand is changed. In addition, all the companies participating in the supply chain can receive the benefit of efficient management by the supply chain system.

With the construction of the accurate supply chain, an increase or a reduction in demand can be appropriately supported.

Since not only finished products but also parts constituting the finished products can be handled by a series of supply chain systems, efficient production/inventory of the parts can be realized. Especially, efficiency can be achieved for parts which are shared among a plurality of finished products (hereinafter referred to as "shared parts").

Even when actual demand of commodities deviates from an initial forecast, the shared parts are applied immediately to commodities sold well from commodities sold poorly or inventory ensured for maintenance to enable realization of maximized sales and appropriate inventory.

(Second Mode for Carrying out)

A supply chain management system according to a second mode for carrying out is basically similar to the supply chain management system according to the first mode for carrying out in that it may have the system configuration as shown in Fig. 2, but the different point is that in each of distributor terminal apparatus 211, 212, ..., 21N, distributor specific finished product demand forecast information is created, this is shared by the supply chain management apparatus 202, and the supply chain management apparatus 202 aggregates the distributor specific finished product demand forecast information to create finished product specific finished product demand forecast information.

(Example of Configuration of Distributor Terminal Apparatus)

Fig. 14 is a block diagram showing an example of the configuration of the distributor terminal apparatus according to the present mode for carrying out. It differs from the configuration of the distributor terminal apparatus according to the first mode for carrying out shown in Fig. 3 in that it has a finished product demand forecast information creating means 1401. The other points are similar to the distributor terminal apparatus according to the first mode for carrying out.

The finished product demand forecast information creating means 1401 operates to receive actual sales information from an actual sales information providing means 303, create distributor specific finished product demand forecast information based on this, and provide it for the supply chain management apparatus 202.

(Example of Configuration of Supply Chain Management Apparatus)

Fig. 15 is a block diagram showing an example of the configuration of the supply chain management apparatus 202 according to the present mode for carrying out. It differs from the configuration of the supply chain management apparatus 202 of the first mode for carrying out shown in Fig. 5 in that it does not have the actual sales information acquiring means 502, the actual sales information recording means 503, and has a finished product demand forecast information aggregating means 1501 instead of the finished product demand forecast information creating means 504. The other points are similar to the supply chain management apparatus 202 according to the first mode for carrying out.

The finished product demand forecast information aggregating means 1501 operates to receive the distributor specific finished product demand forecast information provided by each distributor terminal apparatus, aggregate them for each finished product to create finished product specific product demand forecast information, and send this to a part demand forecast information creating means 506.

(Advantages of System According to Present Mode for Carrying out)

The supply chain management system according to the present mode for carrying out has advantages as follows.

Specifically, since the distributor which more easily obtains information on variations in demand can create the demand forecast information, a more accurate supply chain can be constituted, and consequently, an increase or a reduction in demand can be more appropriately supported.

Since information on commodity demand forecast is shared in addition to the number of orders among entities (companies) participating in the supply chain. Thus, it is possible not only to construct an effective production/supply system based on the number of orders, but also to determine the number of orders in accordance with actual demand, and to smoothly and immediately change an ordering/production/supply system even when actual demand is changed.

## Claims

**1.** A supply chain management system for managing a supply chain among a distributor, a finished product manufacturer, and a part manufacturer, comprising:

(A) a supply chain management apparatus; and
(B) a distributor terminal apparatus connectable to said supply chain management apparatus through a communication network; and
(C) a part manufacturer terminal apparatus connectable to said supply chain management apparatus through the communication network,

wherein said distributor terminal apparatus provides actual sales information for said supply chain management apparatus and receives finished product delivery schedule information created by said supply chain management apparatus based on said actual sales information,

said part manufacturer terminal apparatus receives part demand forecast information on a part handled by that part manufacturer, creates part delivery schedule information based on this, and provides this for the supply chain management apparatus,

said supply chain management apparatus creates finished product demand forecast information based on the actual sales information provided by the distributor terminal apparatus, creates the part demand forecast information from said finished product demand forecast information, provides this for the part manufacturer terminal apparatus, creates the finished product delivery schedule information based on the part delivery schedule information provided by said part manufacturer terminal apparatus, and provides said finished product delivery schedule information for the distributor terminal apparatus, and

said distributor terminal apparatus enables making of a modification request for the finished product demand forecast information after it receives said demand forecast information, and said supply chain management apparatus enables the modification to the finished product demand forecast information and the finished product delivery schedule information in accordance with said modification request.

**2.** A distributor terminal apparatus comprising:

actual sales information providing means for providing actual sales information; and
finished product delivery schedule information presenting means for presenting finished product delivery schedule information created based on said actual sales information.

**3.** The distributor terminal apparatus according to claim 2, wherein said finished product delivery schedule information is created using part delivery schedule information.

**4.** The distributor terminal apparatus according to claim 2, wherein said distributor terminal apparatus enables making of a modification request for finished product demand forecast information after receiving said demand forecast information.

**5.** A distributor terminal apparatus comprising:

actual sales information providing means for providing actual sales information;
finished product demand forecast information creating means for receiving the actual sales information from the actual sales information providing means, creating distributor specific finished product demand forecast information based on said actual sales information, and providing this; and
finished product delivery schedule information presenting means for presenting finished product delivery schedule information created based on said finished product demand forecast information.

**6.** A part manufacturer terminal apparatus comprising:

part demand forecast information acquiring means for receiving part demand forecast information; and
part delivery schedule information creating means for creating part delivery schedule information based on information input in accordance with said part demand forecast information.

**7.** A supply chain management apparatus comprising:

finished product demand forecast information creating means for creating finished product demand forecast information based on actual sales information;
part demand forecast information creating means for receiving the finished product demand forecast information from the finished product demand forecast information creating means, and creating part demand forecast information using this; and
finished product delivery schedule information creating means for creating finished product delivery schedule information using part delivery schedule information created using said part demand forecast information.

**8.** The supply chain management apparatus according to claim 7, wherein, when said apparatus receives information requesting a modification to the finished product demand forecast information, said apparatus modifies the part demand forecast information based on the modified finished product demand forecast information, and provides the modified part demand forecast information.

**9.** A supply chain management apparatus comprising:

finished product demand forecast information aggregating means for receiving distributor specific finished product demand forecast information and creating finished product demand forecast information;
part demand forecast information creating means for receiving the finished product demand forecast information from the finished product demand forecast information aggregating means and creating part demand forecast information using this; and
finished product delivery schedule information creating means for creating finished product delivery schedule information using part delivery schedule information created using said part demand forecast information.

**10.** A supply chain management method for managing a supply chain among a distributor, a finished product manufacturer, and a part manufacturer, comprising:

a step of creating finished product demand forecast information based on provided actual sales information;
a step of creating part demand forecast information from said finished product demand forecast information; and
a step of creating finished product delivery schedule information based on part delivery schedule information created using said part demand forecast information, and providing said finished product delivery schedule information.

**11.** The supply chain management method according to clam 10, further comprising:, when information requesting a modification to the finished product demand forecast information is received, a step of modifying the part demand forecast information based on the modified finished product demand forecast information, and providing the modified part demand forecast information.

**12.** A supply chain management method for managing a supply chain among a distributor, a finished product manufacturer, and a part manufacturer, comprising:

a step of aggregating provided distributor specific finished product demand forecast information to create finished product demand forecast information;
a step of creating part demand forecast information from said finished product demand forecast information; and
a step of creating finished product delivery schedule information based on part delivery schedule information created using said part demand forecast information, and providing said finished product delivery schedule information.

**13.** A supply chain management method comprising:

a step of providing actual sales information;
a step of acquiring finished product delivery schedule information created based on said actual sales information and presenting this; and
a step of receiving information on a modification to finished product demand forecast information after said demand forecast information is received.

**14.** A supply chain management method comprising:

a step of receiving part demand forecast information; and
a step of creating part delivery schedule information based on information input in accordance with said part demand forecast information and providing this.

**15.** A program for causing a computer to function as a distributor terminal apparatus, causing the computer to function as:

actual sales information providing means for providing actual sales information; and
finished product delivery schedule information presenting means for presenting finished product delivery schedule information created based on said actual sales information.

**16.** The program according to claim 15, wherein said finished produce delivery schedule information is created using part delivery schedule information.

**17.** The program according to claim 15, wherein said program enables the computer to make a modification request for finished product demand forecast information after said demand forecast information is received.

**18.** A program for causing a computer to function as a distributor terminal apparatus, causing the computer to function as:

actual sales information providing means for providing actual sales information;
finished product demand forecast information creating means for receiving the actual sales information from the actual sales information providing means, creating distributor specific finished product demand forecast information based on said actual sales information, and providing this; and
finished product delivery schedule information presenting means for presenting finished product delivery schedule information created based on said finished product demand forecast information.

**19.** A program for causing a computer to function as a part manufacturer terminal apparatus, causing the computer to function as:

part demand forecast information acquiring means for receiving part demand forecast information; and
part delivery schedule information creating means for creating part delivery schedule information based on information input in accordance with said part demand forecast information.

**20.** A program for causing a computer to function as a supply chain management apparatus, causing the computer to function as:

finished product demand forecast information creating means for creating finished product demand forecast information based on actual sales information;
part demand forecast information creating means for receiving the finished product demand forecast information from the finished produce demand forecast information creating means and creating part demand forecast information using this; and
finished product delivery schedule information creating means for creating finished produce delivery schedule information using part delivery schedule information created using said part demand forecast information.

**21.** The program according to claim 20, wherein, when the computer receives information requesting a modification to the finished product demand forecast information, said program causes the computer to modify the part demand forecast information based on the modified finished product demand forecast information, and to provide the modified part demand forecast information.

**22.** A program for causing a computer to function as a supply chain management apparatus, causing the computer to function as:

finished product demand forecast information aggregating means for receiving distributor specific finished product demand forecast information and creating finished product demand forecast information;
part demand forecast information creating means for receiving the finished product demand forecast information from the finished product demand forecast information aggregating means and creating part demand forecast information using this; and
finished product delivery schedule information creating means for creating finished product delivery schedule information using part delivery schedule information created using said part demand forecast information.

**23.** A program for causing a computer to perform a supply chain management method for managing a supply chain among a distributor, a finished product manufacturer, and a part manufacturer, causing the computer to perform:

a step of creating finished product demand forecast information based on provided actual sales information;
a step of creating part demand forecast information from said finished product demand forecast information; and
a step of creating finished produce delivery schedule information using part delivery schedule information created using said part demand forecast information, and providing said finished product delivery schedule information.

**24.** The program according to claim 23, wherein, when information requesting a modification to the finished product demand forecast information is received, said program causes the computer to perform a step of modifying the part demand forecast information based on the modified finished product demand forecast information and providing the modified part demand forecast information.

**25.** A program for causing a computer to perform a supply chain management method for managing a supply chain among a distributor, a finished product manufacturer, and a part manufacturer, causing the computer to perform:

a step of aggregating provided distributor specific finished product demand forecast information to create finished product demand forecast information;
a step of creating part demand forecast information from said finished product demand forecast information; and
a step of creating finished product delivery schedule information based on part delivery schedule information created using said part demand forecast information, and providing said finished product delivery schedule information.

**26.** A program for causing a computer to perform a supply chain management method, causing the computer to perform:

a step of providing actual sales information;
a step of acquiring finished product delivery schedule information created based on said actual sales information and presenting this; and
a step of receiving information on a modification to finished product demand forecast information after said demand forecast information is received.

**27.** A program for causing a computer to perform a supply chain management method, causing the computer to perform:

a step of receiving part demand forecast information; and
a step of creating part delivery schedule information based on information input in accordance with said part demand forecast information and providing this.

**28.** A computer readable recording medium storing the program according to any one of claims 15 through 27.

FIG. 1

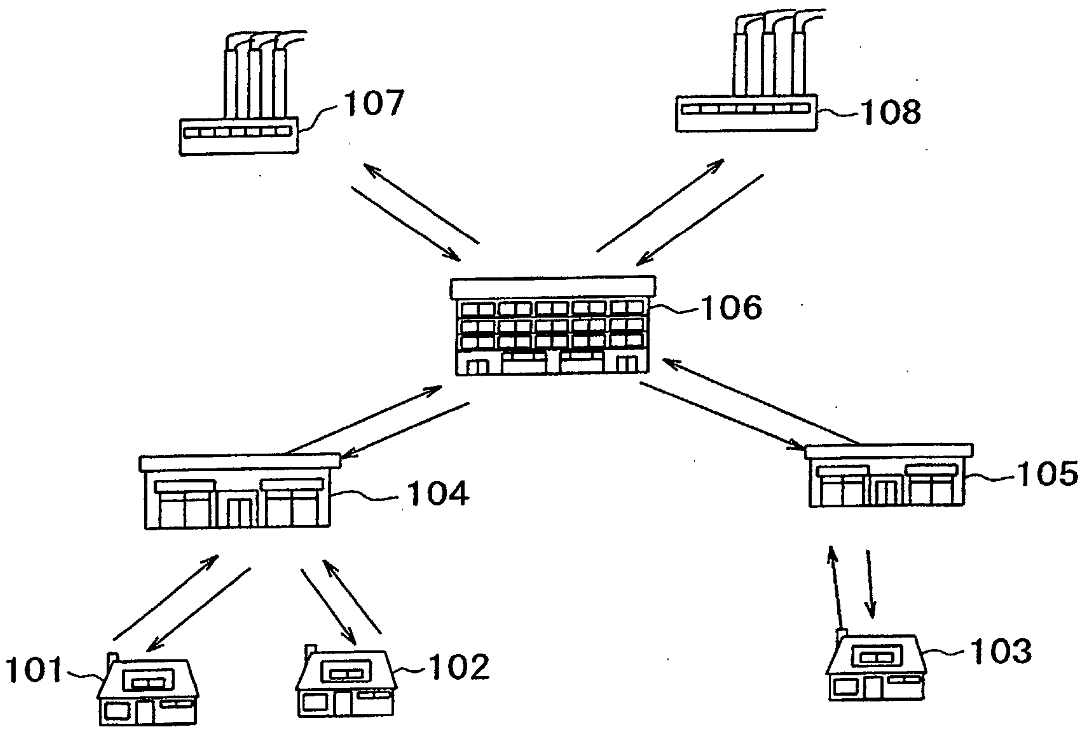

F I G. 1

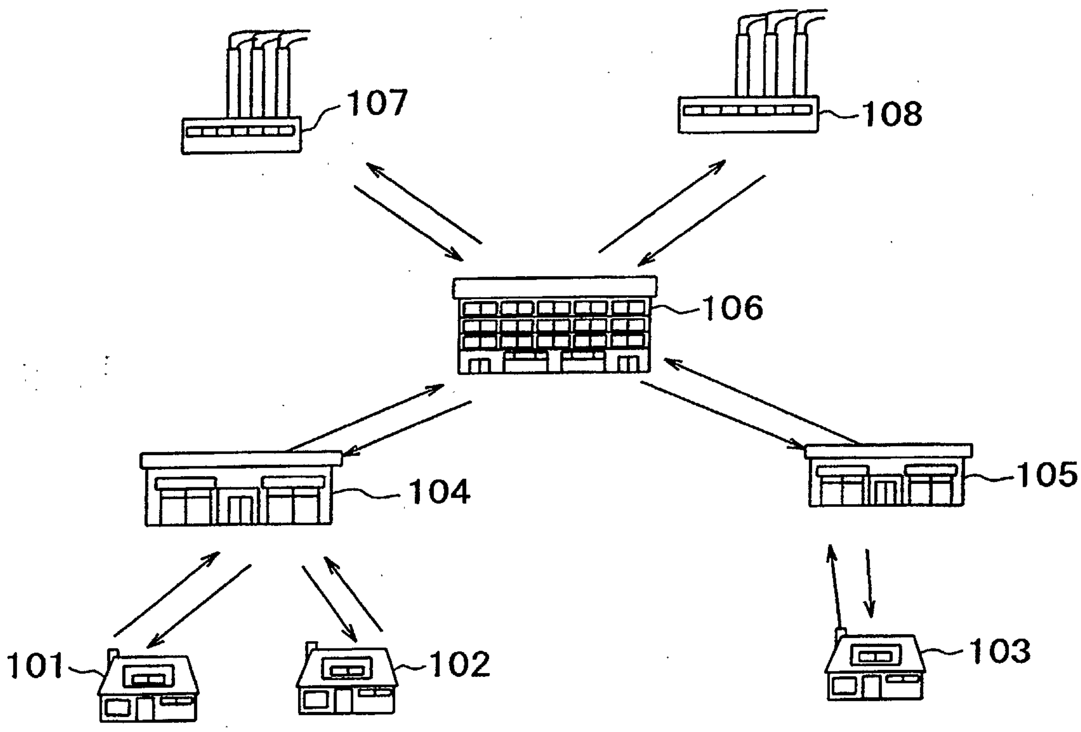

F I G. 2

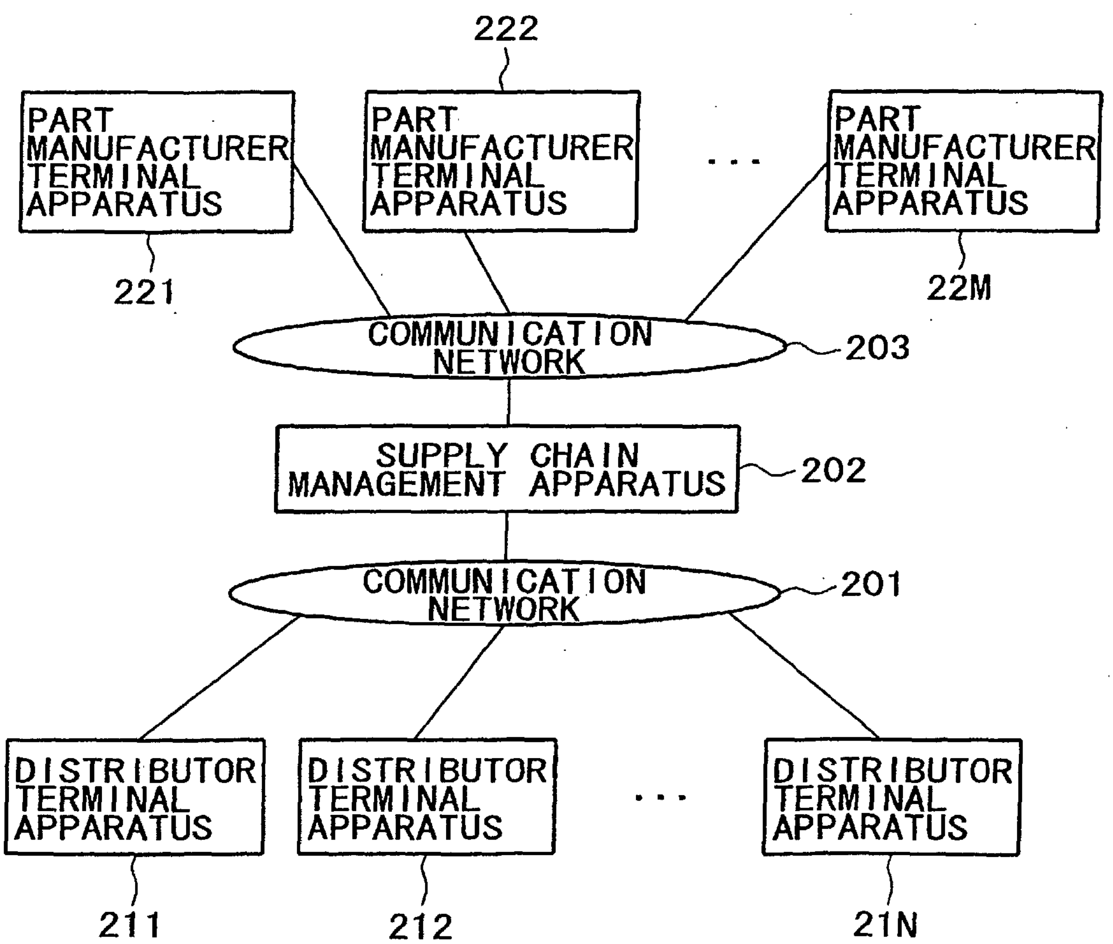
222
PART MANUFACTURER TERMINAL APPARATUS
PART MANUFACTURER TERMINAL APPARATUS
...
PART MANUFACTURER TERMINAL APPARATUS
221
22M
COMMUNICATION NETWORK
203
SUPPLY CHAIN MANAGEMENT APPARATUS
202
COMMUNICATION NETWORK
201
DISTRIBUTOR TERMINAL APPARATUS
DISTRIBUTOR TERMINAL APPARATUS
...
DISTRIBUTOR TERMINAL APPARATUS
211
212
21N

F I G. 3

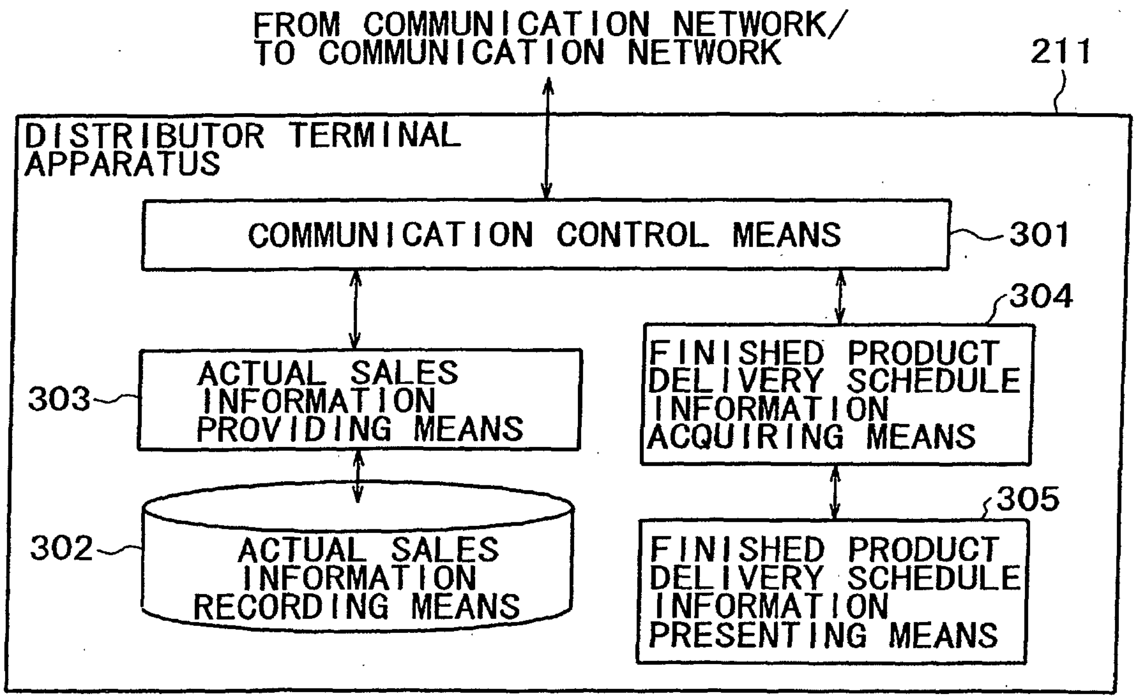
FROM COMMUNICATION NETWORK/
TO COMMUNICATION NETWORK
211
DISTRIBUTOR TERMINAL APPARATUS
COMMUNICATION CONTROL MEANS
301
304
303
ACTUAL SALES INFORMATION PROVIDING MEANS
FINISHED PRODUCT DELIVERY SCHEDULE INFORMATION ACQUIRING MEANS
305
302
ACTUAL SALES INFORMATION RECORDING MEANS
FINISHED PRODUCT DELIVERY SCHEDULE INFORMATION PRESENTING MEANS

F I G. 4

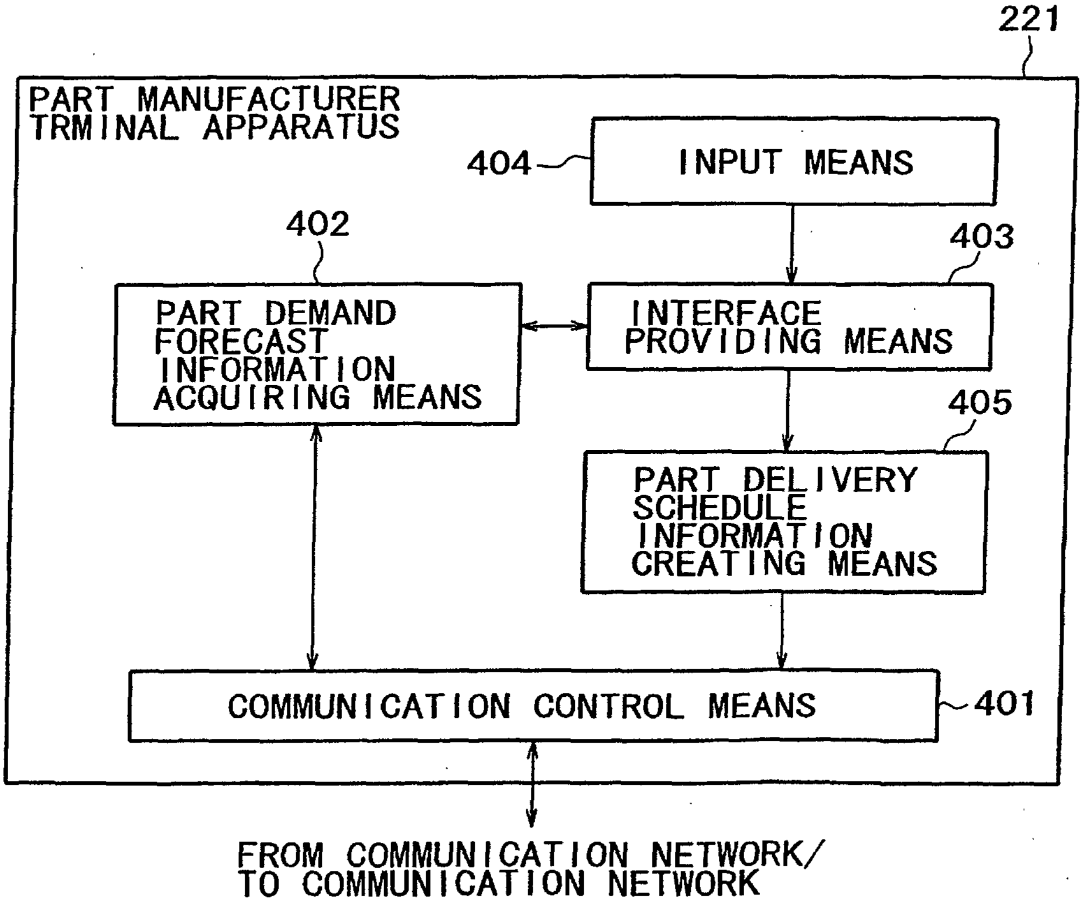
221
PART MANUFACTURER TRMINAL APPARATUS
404
INPUT MEANS
402
403
PART DEMAND FORECAST INFORMATION ACQUIRING MEANS
INTERFACE PROVIDING MEANS
405
PART DELIVERY SCHEDULE INFORMATION CREATING MEANS
COMMUNICATION CONTROL MEANS
401
FROM COMMUNICATION NETWORK/
TO COMMUNICATION NETWORK

FIG. 5

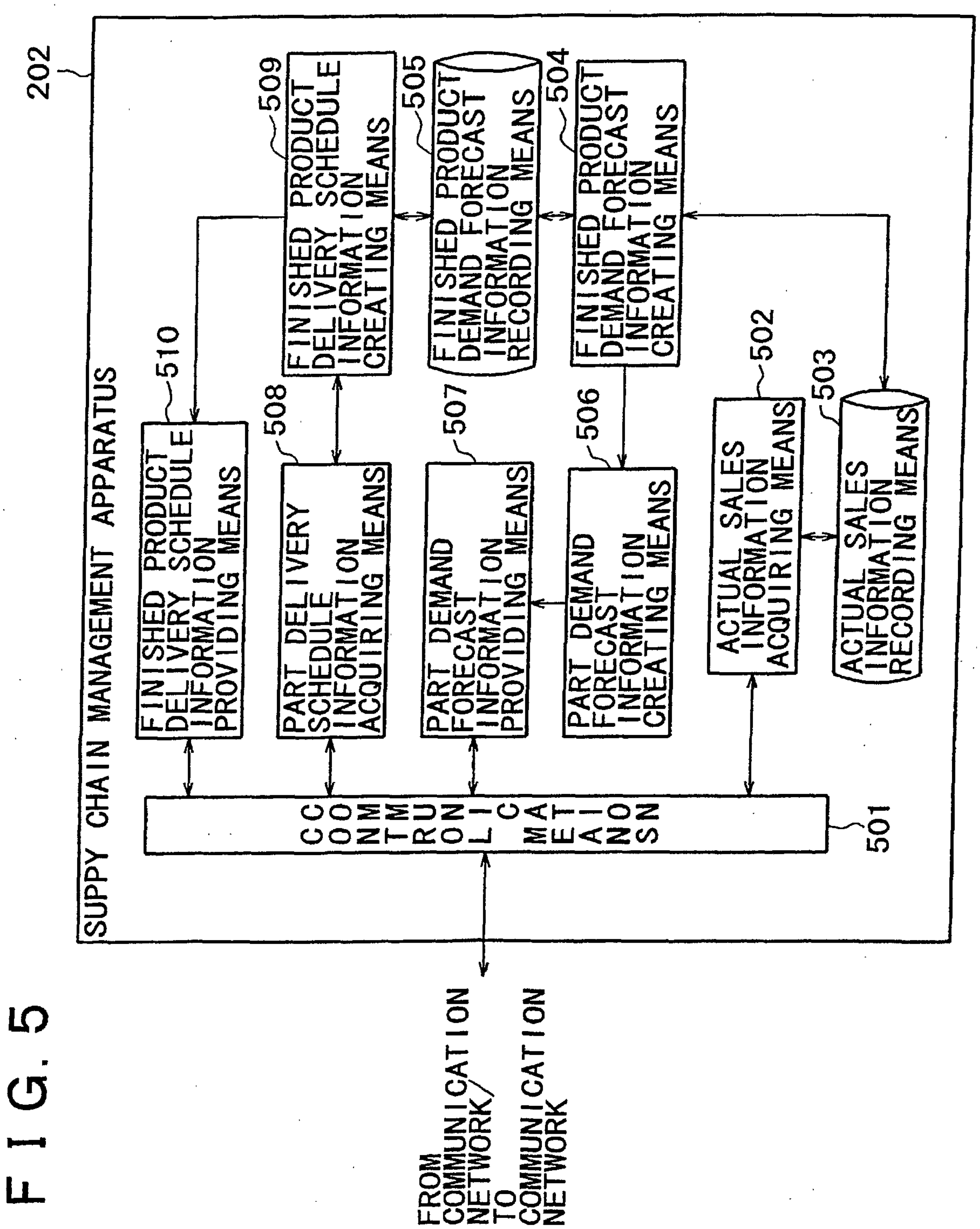
202
SUPPY CHAIN MANAGEMENT APPARATUS
501
COMMUNICATION MEANS
502
ACTUAL SALES INFORMATION ACQUIRING MEANS
503
ACTUAL SALES INFORMATION RECORDING MEANS
504
FINISHED PRODUCT DEMAND FORECAST INFORMATION CREATING MEANS
505
FINISHED PRODUCT DEMAND FORECAST INFORMATION RECORDING MEANS
506
PART DEMAND FORECAST INFORMATION CREATING MEANS
507
PART DEMAND FORECAST INFORMATION PROVIDING MEANS
508
PART DELIVERY SCHEDULE INFORMATION ACQUIRING MEANS
509
FINISHED PRODUCT DELIVERY SCHEDULE INFORMATION CREATING MEANS
510
FINISHED PRODUCT DELIVERY SCHEDULE INFORMATION PROVIDING MEANS
FROM COMMUNICATION NETWORK/ TO COMMUNICATION NETWORK

F I G. 6

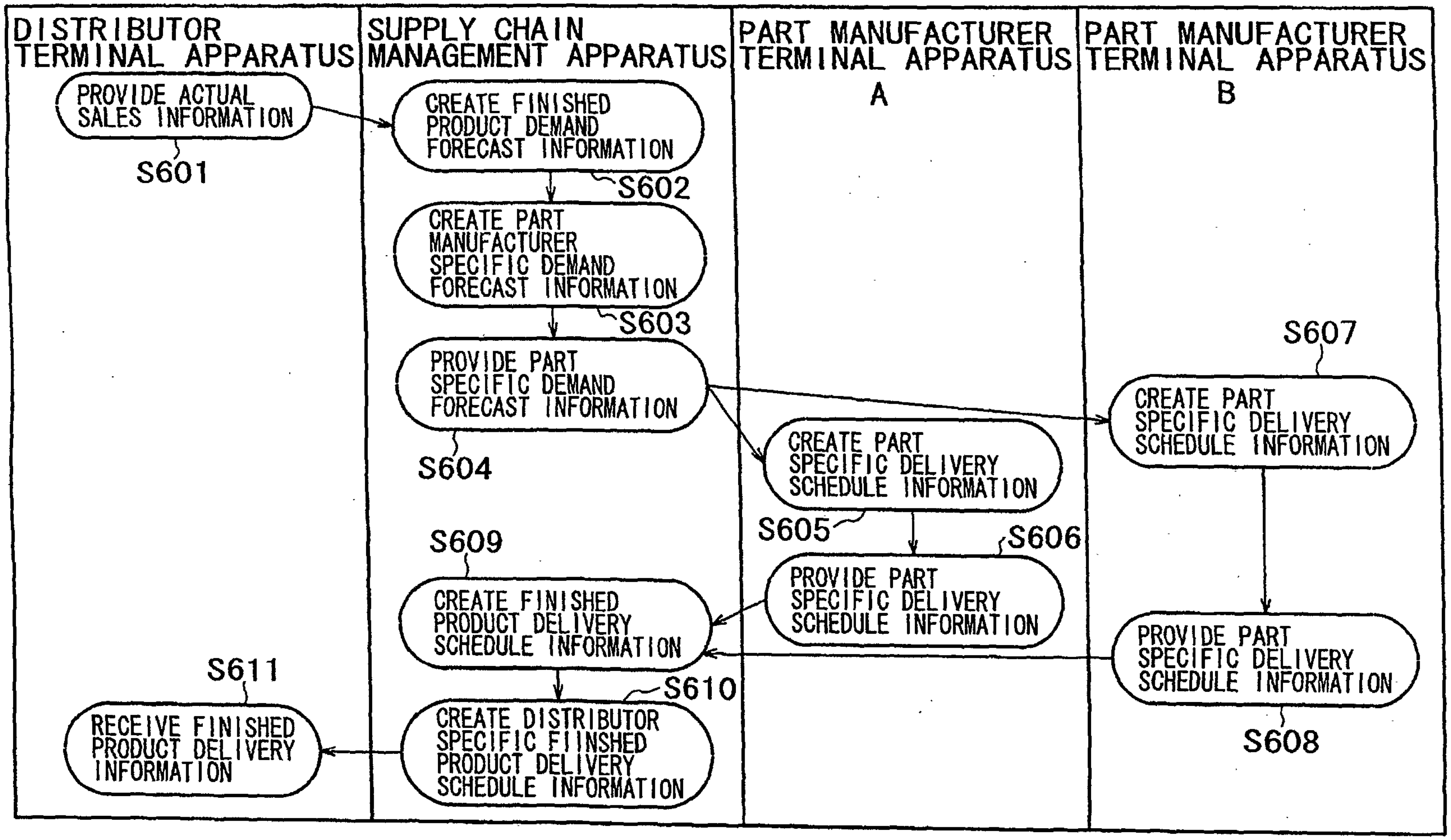
DISTRIBUTOR TERMINAL APPARATUS
SUPPLY CHAIN MANAGEMENT APPARATUS
PART MANUFACTURER TERMINAL APPARATUS A
PART MANUFACTURER TERMINAL APPARATUS B
PROVIDE ACTUAL SALES INFORMATION
S601
CREATE FINISHED PRODUCT DEMAND FORECAST INFORMATION
S602
CREATE PART MANUFACTURER SPECIFIC DEMAND FORECAST INFORMATION
S603
PROVIDE PART SPECIFIC DEMAND FORECAST INFORMATION
S604
CREATE PART SPECIFIC DELIVERY SCHEDULE INFORMATION
S605
PROVIDE PART SPECIFIC DELIVERY SCHEDULE INFORMATION
S606
S607
CREATE PART SPECIFIC DELIVERY SCHEDULE INFORMATION
PROVIDE PART SPECIFIC DELIVERY SCHEDULE INFORMATION
S608
S609
CREATE FINISHED PRODUCT DELIVERY SCHEDULE INFORMATION
S610
CREATE DISTRIBUTOR SPECIFIC FIINSHED PRODUCT DELIVERY SCHEDULE INFORMATION
S611
RECEIVE FINISHED PRODUCT DELIVERY INFORMATION

# F I G. 7

| | ACTUAL SALES DATA | 4/2 WEEK | | | | | | | 4/9 WEEK | | | | | | |
|---|---|---|---|---|---|---|---|---|---|---|---|---|---|---|---|
| | | 4/2 | 4/3 | 4/4 | 4/5 | 4/6 | 4/7 | 4/8 | 4/9 | 4/10 | 4/11 | 4/12 | 4/13 | 4/14 | 4/15 |
| 701 | FINISHED PRODUCT A | 10 | 15 | 12 | 16 | 20 | 30 | 39 | 15 | 16 | 14 | 16 | 17 | 29 | 40 |
| 702 | (WEEKLY TOTAL) | 142 | | | | | | | 147 | | | | | | |
| 703 | FINISHED PRODUCT B | 20 | 21 | 20 | 22 | 25 | 35 | 45 | 22 | 23 | 24 | 22 | 25 | 35 | 45 |
| | (WEEKLY TOTAL) | 188 | | | | | | | 196 | | | | | | |
| 704 | FINISHED PRODUCT C | 13 | 12 | 14 | 15 | 16 | 20 | 29 | 15 | 16 | 17 | 15 | 16 | 30 | 40 |
| | (WEEKLY TOTAL) | 119 | | | | | | | 149 | | | | | | |
| | ⋮ | ⋮ | | | | | | | ⋮ | | | | | | |

F I G. 8

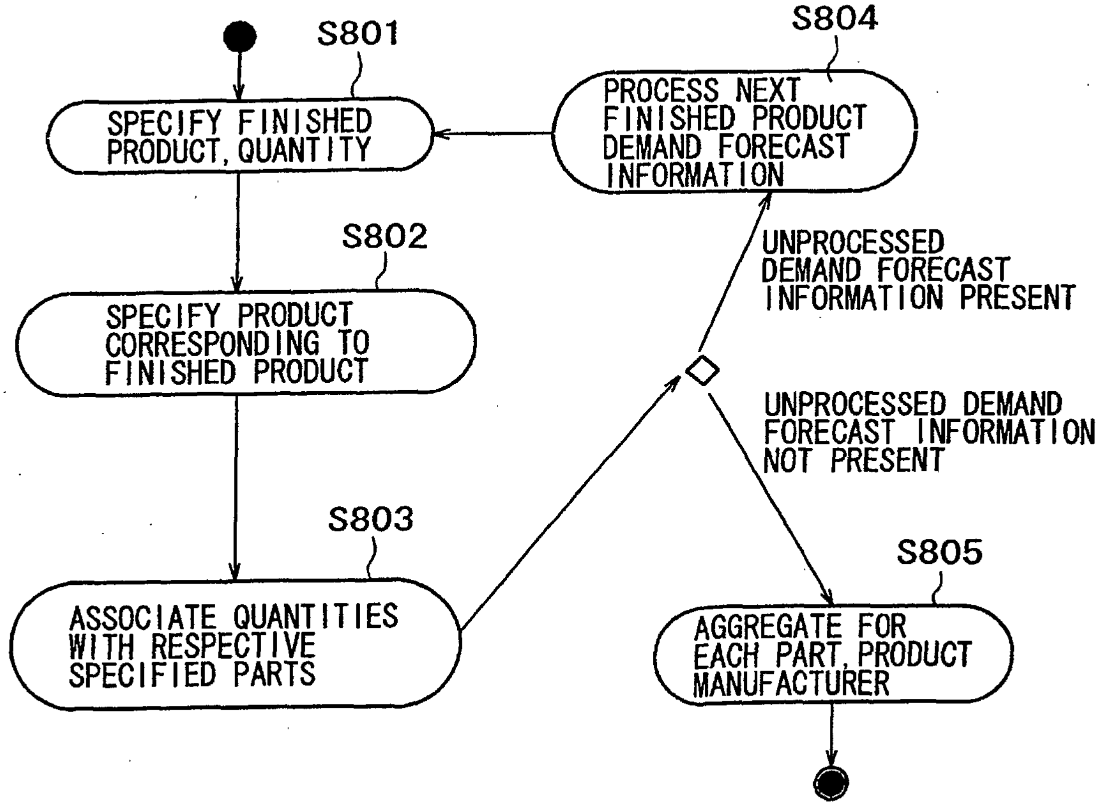
S801
SPECIFY FINISHED PRODUCT, QUANTITY
S802
SPECIFY PRODUCT CORRESPONDING TO FINISHED PRODUCT
S803
ASSOCIATE QUANTITIES WITH RESPECTIVE SPECIFIED PARTS
S804
PROCESS NEXT FINISHED PRODUCT DEMAND FORECAST INFORMATION
UNPROCESSED DEMAND FORECAST INFORMATION PRESENT
UNPROCESSED DEMAND FORECAST INFORMATION NOT PRESENT
S805
AGGREGATE FOR EACH PART, PRODUCT MANUFACTURER

# FIG. 9

| | 907 FINISHED PRODUCT | 908 PART NAME | 909 PART MANUFACTURER NAME |
|---|---|---|---|
| 901 | FINISHED PRODUCT A | BASE UNIT BU1 | X COMPANY |
| 902 | FINISHED PRODUCT A | HDI | Y COMPANY |
| 903 | FINISHED PRODUCT A | DRIVE1 | Z COMPANY |
| 904 | FINISHED PRODUCT A | MEMORY1 | W COMPANY |
| 905 | FINISHED PRODUCT A | CPU1 | W COMPANY |
| 906 | FINISHED PRODUCT B | BASE UNIT BU1 | X COMPANY |
| | FINISHED PRODUCT B | HDI | Y COMPANY |
| | FINISHED PRODUCT B | DRIVE1 | Z COMPANY |
| | FINISHED PRODUCT B | MEMORY1 | P COMPANY |
| | FINISHED PRODUCT B | CPU1 | P COMPANY |
| | ⋮ | ⋮ | ⋮ |

# FIG. 10

1001

| PART NAME | | 4/2 WEEK | | | | | | | 4/9 WEEK | | | | | | | |
|---|---|---|---|---|---|---|---|---|---|---|---|---|---|---|---|---|
| | | 4/2 | 4/3 | 4/4 | 4/5 | 4/6 | 4/7 | 4/8 | 4/9 | 4/10 | 4/11 | 4/12 | 4/13 | 4/14 | 4/15 | |
| BASE UNIT BU1 | DEMAND FORECAST VALUE | 10 | 15 | 12 | 16 | 20 | 30 | 39 | 15 | 16 | 14 | 16 | 17 | 29 | 40 | 1002 |
| | | 142 | | | | | | | 147 | | | | | | | 1003 |
| | DELIVERY INFORMATION VALUE | 15 | 16 | 14 | 16 | 17 | 29 | 40 | 18 | 19 | 17 | 19 | 20 | 32 | 43 | 1004 |
| | | 147 | | | | | | | 168 | | | | | | | 1005 |
| ⋮ | | ⋮ | | | | | | | ⋮ | | | | | | | |

FIG. 11

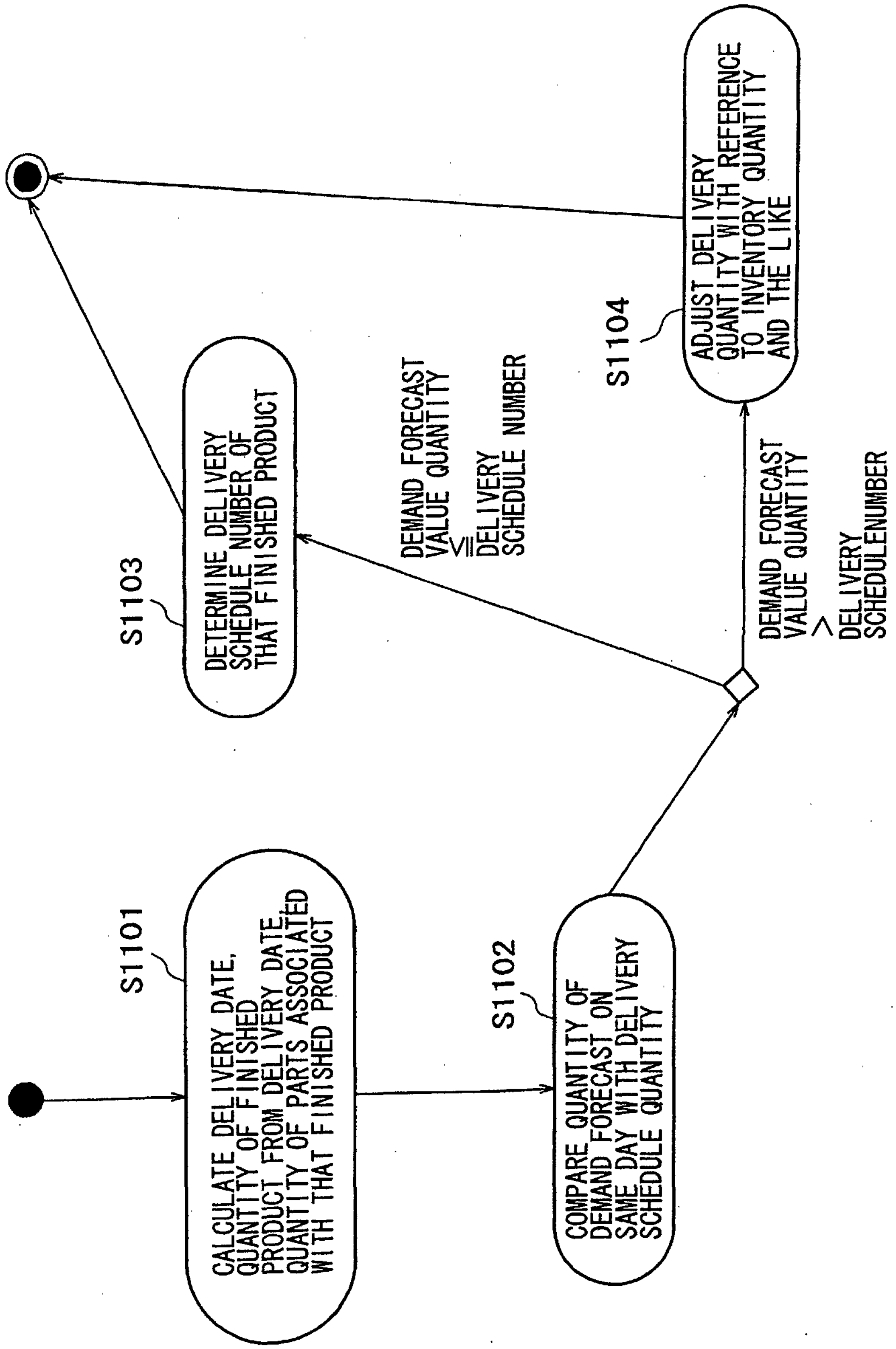
S1101
CALCULATE DELIVERY DATE, QUANTITY OF FINISHED PRODUCT FROM DELIVERY DATE, QUANTITY OF PARTS ASSOCIATED WITH THAT FINISHED PRODUCT
S1102
COMPARE QUANTITY OF DEMAND FORECAST ON SAME DAY WITH DELIVERY SCHEDULE QUANTITY
DEMAND FORECAST VALUE QUANTITY ≦ DELIVERY SCHEDULE NUMBER
S1103
DETERMINE DELIVERY SCHEDULE NUMBER OF THAT FINISHED PRODUCT
DEMAND FORECAST VALUE QUANTITY > DELIVERY SCHEDULENUMBER
S1104
ADJUST DELIVERY QUANTITY WITH REFERENCE TO INVENTORY QUANTITY AND THE LIKE

# F I G. 1 2

CURRENT DAY (arrow pointing to the start of 3/19~3/25)

| | | 3/12~3/18 | 3/19~3/25 | | | | | | | 3/26~4/1 | | | | | | |
|---|---|---|---|---|---|---|---|---|---|---|---|---|---|---|---|---|
| | FINISHED PRODUCT A | | | | | | | | | | | | | | | |
| 1201 | ACTUAL SALES WEEKLY TOTAL/FORECAST VALUE | 18 | 18 | | | | | | | 20 | | | | | | |
| 1202 | ACTUAL SALES DAILY TOTAL/FORECAST VALUE | | 2 | 2 | 1 | 1 | 4 | 5 | 3 | 4 | 3 | 4 | 2 | 5 | 5 | 2 |
| 1203 | NUMBER IN INVENTORY | 18 | 18 | 19 | 21 | 21 | 14 | 14 | 15 | 17 | 19 | 19 | 22 | 14 | 14 | 16 |
| 1204 | DELIVERY SCHEDULE NUMBER | | 2 | 3 | 4 | 4 | 0 | 1 | 0 | 3 | 4 | 5 | 6 | 1 | 1 | 0 |
| 1205 | FINISHED PRODUCT B | | | | | | | | | | | | | | | |
| | ACTUAL SALES WEEKLY TOTAL/FORECAST VALUE | 21 | 21 | | | | | | | 20 | | | | | | |
| | ACTUAL SALES DAILY TOTAL/FORECAST VALUE | | 2 | 2 | 3 | 4 | 1 | 4 | 5 | 4 | 3 | 4 | 2 | 5 | 5 | 2 |
| | NUMBER IN INVENTORY | 24 | 24 | 25 | 25 | 24 | 23 | 21 | 19 | 23 | 25 | 25 | 28 | 20 | 20 | 22 |
| | DELIVERY SCHEDULE NUMBER | | 2 | 3 | 4 | 4 | 0 | 1 | 0 | 3 | 4 | 5 | 6 | 1 | 1 | 0 |
| | | ⋮ | | | | | | | | | | | | | | |

# FIG. 13

CURRENT DAY ↓ (3/19)

| | | 3/12~3/18 | 3/19~3/25 | | | | | | | 3/26~4/1 | | | | | | |
|---|---|---|---|---|---|---|---|---|---|---|---|---|---|---|---|---|
| | FINISHED PRODUCT A | | | | | | | | | | | | | | | |
| 1301 | ACTUAL SALES ACTUAL PERFORMANCE VALUE/FORECAST VALUE | 18 | 18 | | | | | | | 20 | | | | | | |
| 1302 | ACTUAL SALES DAILY TOTAL/FORECAST VALUE | | 2 | 2 | 1 | 1 | 4 | 5 | 3 | 4 | 3 | 4 | 2 | 5 | 5 | 2 |
| 1303 | ACTUAL SALES ADDITION | | | | | | | | | | | | | | | |
| 1304 | APPROVAL/DETERMINATION | | | | | | | | | | | | | | | |
| 1305 | NUMBER IN INVENTORY | 18 | 18 | 19 | 21 | 21 | 14 | 14 | 15 | 17 | 19 | 19 | 22 | 14 | 14 | 16 |
| 1306 | DELIVERY NUMBER | | 2 | 3 | 4 | 4 | 0 | 1 | 0 | 3 | 4 | 5 | 6 | 1 | 1 | 0 |
| 1307 | FINISHED PRODUCT B | | | | | | | | | | | | | | | |
| 1307 | ACTUAL SALES WEEKLY TOTAL/FORECAST VALUE | 21 | 21 | | | | | | | 28 | | | | | | |
| 1307 | ACTUAL SALES DAILY TOTAL/FORECAST VALUE | | 2 | 2 | 3 | 4 | 1 | 4 | 5 | 4 | 3 | 4 | 2 | 5 | 5 | 2 |
| 1307 | ACTUAL SALES ADDITION | | | | | | | | | | | | | 1 | 2 (1308) | |
| 1307 | APPROVAL/DETERMINATION | | | | | | | | | | | | | COMPLETED | NOT YET DETERMINED (1309) | |
| 1307 | NUMBER IN INVENTORY | 24 | 24 | 25 | 25 | 24 | 23 | 21 | 19 | 23 | 25 | 25 | 28 | 20 | 20 | 22 |
| 1307 | DELIVERY NUMBER | | 2 | 3 | 4 | 4 | 0 | 1 | 0 | 3 | 4 | 5 | 6 | 1 | 1 | 0 |

FIG. 14

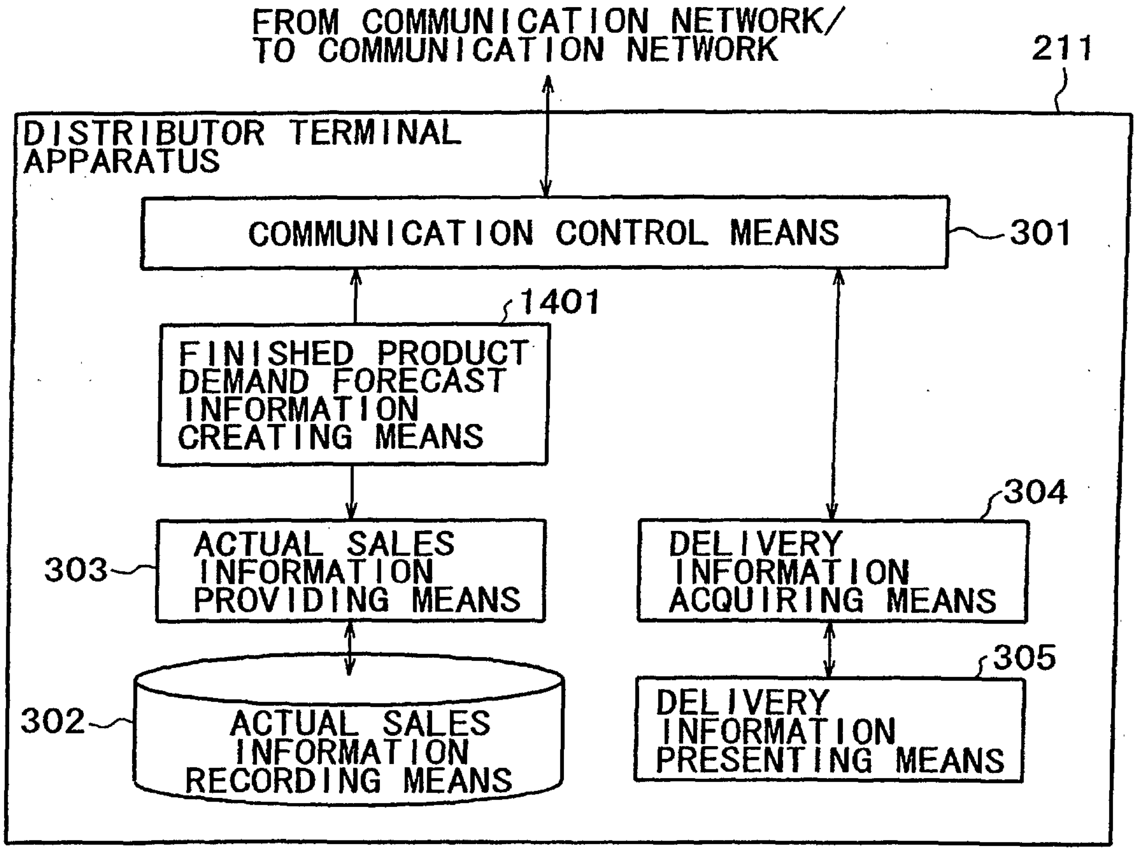
FROM COMMUNICATION NETWORK/
TO COMMUNICATION NETWORK
211
DISTRIBUTOR TERMINAL APPARATUS
COMMUNICATION CONTROL MEANS
301
1401
FINISHED PRODUCT DEMAND FORECAST INFORMATION CREATING MEANS
304
303
ACTUAL SALES INFORMATION PROVIDING MEANS
DELIVERY INFORMATION ACQUIRING MEANS
305
302
ACTUAL SALES INFORMATION RECORDING MEANS
DELIVERY INFORMATION PRESENTING MEANS

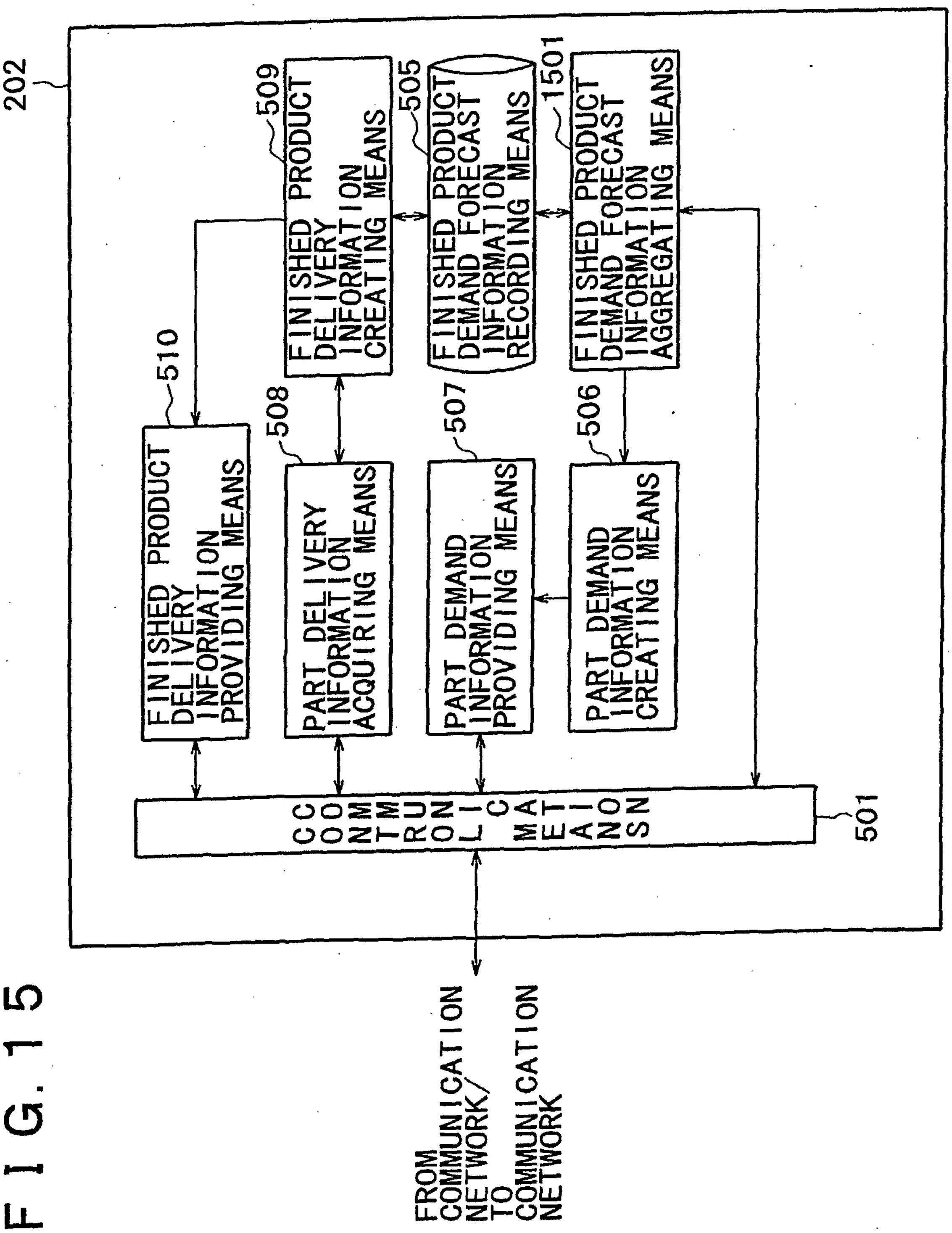

202
FINISHED PRODUCT DELIVERY INFORMATION CREATING MEANS
509
FINISHED PRODUCT DEMAND FORECAST INFORMATION RECORDING MEANS
505
FINISHED PRODUCT DEMAND FORECAST INFORMATION AGGREGATING MEANS
1501
FINISHED PRODUCT DELIVERY INFORMATION PROVIDING MEANS
510
PART DELIVERY INFORMATION ACQUIRING MEANS
508
PART DEMAND INFORMATION PROVIDING MEANS
507
PART DEMAND INFORMATION CREATING MEANS
506
COMMUNICATIONS CONTROL MEANS
501
FROM COMMUNICATION NETWORK/ TO COMMUNICATION NETWORK


F I G. 1 5

## INTERNATIONAL SEARCH REPORT

International application No.
PCT/JP02/07964

A. CLASSIFICATION OF SUBJECT MATTER
Int.Cl$^7$ G06F17/60

According to International Patent Classification (IPC) or to both national classification and IPC

B. FIELDS SEARCHED

Minimum documentation searched (classification system followed by classification symbols)
Int.Cl$^7$ G06F17/60

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)
JICST FILE(JOIS), WPI, INSPEC(DIALOG)

C. DOCUMENTS CONSIDERED TO BE RELEVANT

| Category* | Citation of document, with indication, where appropriate, of the relevant passages | Relevant to claim No. |
|---|---|---|
| Y | JP 5-250387 A (NEC Corp.), 28 September, 1993 (28.09.93), Full text; all drawings (Family: none) | 1-9,15-28 |
| Y | JP 2000-148785 A (Hitachi, Ltd.), 30 May, 2000 (30.05.00), Par. Nos. [0022] to [0054]; Figs. 1 to 20 (Family: none) | 1-9,15-28 |
| Y | JP 2000-113051 A (Hitachi, Ltd.), 21 April, 2000 (21.04.00), Par. Nos. [0011] to [0169]; Figs. 1 to 28 (Family: none) | 1-9,15-28 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 September, 2002 (05.09.02) | 17 September, 2002 (17.09.02) |
| Name and mailing address of the ISA/ Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP02/07964

C (Continuation). DOCUMENTS CONSIDERED TO BE RELEVANT

| Category* | Citation of document, with indication, where appropriate, of the relevant passages | Relevant to claim No. |
|---|---|---|
| Y | JP 10-228461 A (Hitachi, Ltd.), 25 August, 1998 (25.08.98), Par. Nos. [0033] to [0098]; Figs. 1 to 8 (Family: none) | 2-5,15-18 |
| Y | US 5204821 A (Toyota Jidosha Kabushiki Kaisha), 20 April, 1993 (20.04.93), All pages, all drawings & CA 2027639 A & GB 2237423 A & JP 3-131438 A | 4,7,8,21, 24,26 |
| A | WO 96/10225 A (HOGGE, JOHN, C), 04 April, 1996 (04.04.96), All pages; all drawings & US 5630123 A & GB 2293673 A & EP 755537 A & JP 8-123535 A | 1-9,15-28 |
| A | JP 2000-132619 A (Hitachi, Ltd.), 12 May, 2000 (12.05.00), All pages; all drawings (Family: none) | 1-9,15-28 |

Form PCT/ISA/210 (continuation of second sheet) (July 1998)

**INTERNATIONAL SEARCH REPORT**

International application No.
PCT/JP02/07964

**Box I Observations where certain claims were found unsearchable (Continuation of item 1 of first sheet)**

This international search report has not been established in respect of certain claims under Article 17(2)(a) for the following reasons:

1. [X] Claims Nos.: 10-14
because they relate to subject matter not required to be searched by this Authority, namely:
Claim 10 to 14 pertains to methods for doing businesses and thus relates to a subject matter which this International Searching Authority is not required, under the provisions of Article 17(2)(a)(i) of the PCT and Rule 39.1(iv) of the Regulations under the PCT, to search.

2. [ ] Claims Nos.:
because they relate to parts of the international application that do not comply with the prescribed requirements to such an extent that no meaningful international search can be carried out, specifically:

3. [ ] Claims Nos.:
because they are dependent claims and are not drafted in accordance with the second and third sentences of Rule 6.4(a).

**Box II Observations where unity of invention is lacking (Continuation of item 2 of first sheet)**

This International Searching Authority found multiple inventions in this international application, as follows:

1. [ ] As all required additional search fees were timely paid by the applicant, this international search report covers all searchable claims.

2. [ ] As all searchable claims could be searched without effort justifying an additional fee, this Authority did not invite payment of any additional fee.

3. [ ] As only some of the required additional search fees were timely paid by the applicant, this international search report covers only those claims for which fees were paid, specifically claims Nos.:

4. [ ] No required additional search fees were timely paid by the applicant. Consequently, this international search report is restricted to the invention first mentioned in the claims; it is covered by claims Nos.:

**Remark on Protest** [ ] The additional search fees were accompanied by the applicant's protest.
[ ] No protest accompanied the payment of additional search fees.

Form PCT/ISA/210 (continuation of first sheet (1)) (July 1998)